# EUROPEAN PATENT SPECIFICATION

(11) **EP 4 633 135 B1**
(45) Date of publication and mention of the grant of the patent: **19.08.2026**
(21) Application number: 25167035.2
(22) Date of filing: 28.03.2025
(51) Int. Cl.: H04N 13/32, H04N 13/371, H04N 13/376, H04N 13/38

(54) **MULTISCOPIC DISPLAY WITH COLLIMATED AND DIFFUSED BACKLIGHT**
MULTISKOPISCHE ANZEIGE MIT KOLLIMIERTER UND DIFFUSER RÜCKBELEUCHTUNG
AFFICHAGE MULTISCOPIQUE AVEC RETROECLAIRAGE COLLIMATE ET DIFFUSE

(30) Priority: 09.04.2024 US 202418630168; 05.06.2024 US 202418734344; 04.02.2025 US 202519045018
(43) Date of publication of application: 15.10.2025
(73) Proprietor: Distance Technologies Oy, 00530 Helsinki (FI)
(72) Inventor: Konttori, Urho, 00530 Helsinki (FI); Strandborg, Mikko, 00530 Helsinki (FI); Savolainen, Petri, 00530 Helsinki (FI)
(74) Representative: Moosedog Oy

(56) References cited:
- WO-A1-2021/076424
- US-A1- 2012 002 120
- US-A1- 2022 264 076

## Description

### TECHNICAL FIELD

The present disclosure relates to multiscopic display systems with collimated and diffused backlights. The present disclosure also relates to methods for displaying light field images by employing multiscopic display systems with collimated and diffused backlights.

### BACKGROUND

Existing autostereoscopic techniques often rely on multiscopic optical elements, such as lenticular arrays or parallax barriers, to generate stereoscopic images to be presented to a viewer's eyes. Typically, such autostereoscopic techniques involve a multiscopic optical element comprising multiscopic cells that are designed to receive light from two or more photo-emitting cells of a display. By presenting different images to the left eye and the right eye of the viewer, such autostereoscopic techniques allow for achieving a stereoscopic effect.

However, the existing autostereoscopy techniques have significant drawbacks. The lenticular arrays and the parallax barriers both facilitate achieving a fairly wide viewing zone of the display. A challenge arises when an overall brightness of the display is to be increased by using a collimated or near-collimated light source for a backlight unit of the display. In conventional displays, which require wide viewing angles, the backlight unit must diffuse light over a broad range, often up to a 180-degree field of view. In contrast, multiscopic displays involve emitting light from the backlight unit towards one or more viewers, enabling higher effective brightness with the same energy consumption. This is typically achieved by directing the light into a narrow cone shape, such as a 30-degree angle cone, for example, using reflectors behind the backlight unit. While the aforementioned approach works well when at least one viewer is positioned within a light cone (namely, a viewing zone), problems arise when the at least one viewer moves outside of the light cone. Even though the multiscopic optical elements, such as lenticular arrays, focus light coming from the backlight unit towards specific areas in front of the display, extreme viewing angles lead to problems. In such cases, each multiscopic optical element collects light rays originating from photo-emitting cells of the display that are offset far to a side of the multiscopic optical element. Because the backlight unit is semi-collimated, meaning light rays are predominantly directed in a specific direction, little or no light reaches regions corresponding to the extreme viewing angles, resulting in a loss of the stereoscopic effect or significant image degradation.

US20220264076A1 discloses a display overlaid by a first controllable diffuser operable to diffuse light in a first direction, together with a second controllable diffuser operable to diffuse light in a second direction substantially perpendicular to the first direction. A light beam emitted from a light-emitting device is linearly polarized, and passed through liquid crystal and birefringent materials, with an applied voltage altering the polarization state of the liquid crystal. Depending on the applied state, the beam may then be diffused in either the first direction or the second direction upon transmission through the birefringent material.

WO2021076424A1 discloses a multi-view display incorporating a switchable diffuser. In a first display mode, the diffuser is transparent, operating the multi-view display to display a three-dimensional image, while in a second display mode, the diffuser is translucent, operating the multi-view display to present a two-dimensional image.

Therefore, in light of the foregoing discussion, there exists a need to overcome the aforementioned drawbacks.

### SUMMARY

The present disclosure seeks to provide a display system and a method that facilitate in presenting high-quality, accurate virtual images via a liquid crystal display (LCD) device to eyes of one or more users, in a computationally-efficient and time-efficient manner, even when the eyes of the one or more users lie outside a current viewing zone of the display system. The aim of the present disclosure is achieved by a display system and a method that both employ a controllable backlight unit for expanding the current viewing zone by way of producing and directing towards eyes of one or more users any one of: diffused light rays, a combination of the diffused light rays and collimated light rays, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires it. In particular, where the indefinite article is used, the specification is to be understood as contemplating plurality as well as singularity, unless the context requires otherwise.

### BRIEF DESCRIPTION OF THE DRAWINGS

FIG. 1 illustrates an example implementation of a display system incorporating a collimated and diffused backlight, in accordance with an embodiment of the present disclosure;
FIGs. 2A, 2B, and 2C illustrate various example implementations of a controllable backlight unit, in accordance with various embodiments of the present disclosure; and
FIG. 3A illustrates an exemplary side view of a display system incorporating a collimated and diffused backlight, in accordance with an embodiment of the present disclosure;
FIGs. 3B and 3C illustrate different example scenarios of how a controllable backlight unit of the display system is selectively controlled to produce and direct light rays towards eyes of various users, in accordance with an embodiment of the present disclosure;
FIGs. 3D, 3E, and 3F illustrate different example scenarios of how a controllable backlight unit of the display system is selectively controlled to produce and direct light rays towards eyes of a single user, in accordance with an embodiment of the present disclosure; and
FIG. 4 illustrates steps of a method for displaying light field images by employing a display system incorporating a collimated and diffused backlight, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a display system comprising:
a liquid crystal display (LCD) device comprising a controllable backlight unit that is configured to selectively produce (i) collimated light rays, (ii) diffused light rays, (iii) a combination of the collimated light rays and the diffused light rays; and
at least one processor configured to:
   obtain information indicative of a relative location of a first eye and of a second eye of an individual one of at least one user with respect to an image plane of the LCD device;
   generate or retrieve a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
   display the light field image via the LCD device for presenting at least one virtual object;
   repeat the step of obtaining, the step of generating or retrieving, and the step of displaying for a given time period;
   during the given time period, detect when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the light rays emitted by the controllable backlight unit are being currently directed; and
   when it is detected that at least one of: the first eye, the second eye of the individual one of the at least one user lies outside the current viewing zone of the display system,
      determine a given first region of the controllable backlight unit that is being employed for presenting at least a part of the at least one virtual object to the first eye of the individual one of the at least one user, and a given second region of the controllable backlight unit that is being employed for presenting at least the part of the at least one virtual object to the second eye of the individual one of the at least one user; and
      selectively control the given first region of the controllable backlight unit to produce and direct towards the first eye any one of: (ii) the diffused light rays, (iii) the combination of the collimated light rays and the diffused light rays, whilst selectively controlling the given second region of the controllable backlight unit to produce and direct towards the second eye any one of: (ii) the diffused light rays, (iii) the combination of the collimated light rays and the diffused light rays.

In a second aspect, an embodiment of the present disclosure provides a method comprising:
obtaining information indicative of a relative location of a first eye and of a second eye of an individual one of at least one user with respect to an image plane of a liquid crystal display (LCD) device, the LCD device comprising a controllable backlight unit that is configured to selectively produce (i) collimated light rays, (ii) diffused light rays, (iii) a combination of the collimated light rays and the diffused light rays;
generating or retrieving a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
displaying the light field image via the LCD device for presenting at least one virtual object;
repeating the step of obtaining, the step of generating or retrieving, and the step of displaying for a given time period;
during the given time period, detecting when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the light rays emitted by the controllable backlight unit are being currently directed; and
when it is detected that at least one of: the first eye, the second eye of the individual one of the at least one user lies outside the current viewing zone of the display system,
   determining a given first region of the controllable backlight unit that is being employed for presenting at least a part of the at least one virtual object to the first eye of the individual one of the at least one user, and a given second region of the controllable backlight unit that is being employed for presenting at least the part of the at least one virtual object to the second eye of the individual one of the at least one user; and
   selectively controlling the given first region of the controllable backlight unit to produce and direct towards the first eye any one of: (ii) the diffused light rays, (iii) the combination of the collimated light rays and the diffused light rays, whilst selectively controlling the given second region of the controllable backlight unit to produce and direct towards the second eye any one of: (ii) the diffused light rays, (iii) the combination of the collimated light rays and the diffused light rays.

The present disclosure provides the aforementioned display system and the aforementioned method employing the controllable backlight unit thereby facilitating expansion of the current viewing zone. This results into presenting high-quality, accurate virtual images via the LCD device, in a computationally-efficient and time-efficient manner, even when the first eye and/or the second eye of the individual one of the at least one user lie(s) are outside the current viewing zone of the display system. When the at least one of: the first eye, the second eye lies outside the current viewing zone of the display system, it means that during the given time period, a given eye of the individual one of the at least one user is shifted to a non-optimal position relative to the LCD device, namely, outside the region towards which the collimated light rays are typically directed. In such a case, a visual scene being presented to the individual one of the at least one user appears unclear/blurry, and no stereoscopic effect can be perceived by the first eye and/or the second eye. In such a scenario, the at least one controllable backlight unit is employed to produce and direct the diffused light rays or the combination of the diffused light rays and the collimated light rays in order to dynamically increase/expand the current viewing zone of the display system. Due to such an expansion of the current viewing zone, the given eye that had been shifted to the non-optimal position (during the given time period) would receive sufficient light rays (i.e., the diffused light rays alone or combined light rays) directed towards it. This ensures that the visual scene appears clear and highly accurate to the given eye, and the stereoscopic effect can be perceived by the given eye even when it had been shifted to the non-optimal position. Moreover, the display system and the method are robust, fast, and reliable. The display system and the method support real-time presentation of virtual images to eyes of one or more users, by way of horizontally diffusing the collimated light rays, based on the relative locations of the eyes.

Throughout the present disclosure, the term *"controllable backlight unit"* refers to a component that, in operation, selectively produces (i) the collimated light rays, (ii) the diffused light rays, (iii) the combination of the collimated light rays and the diffused light rays. The term *"collimated light rays"* encompasses fully-collimated light rays as well as near-collimated light rays. By *"near-collimated light rays",* it means that an angle formed by such light rays with respect to a predefined direction of collimation is less than a predefined angle. This predefined angle may, for example, lie within a range of 10 degrees to 30 degrees. The predefined direction of collimation could be along an optical axis of the LCD device. It will be appreciated that the predefined direction of collimation is not limited to the optical axis of the LCD device and could be any other direction. As the predefined direction of collimation is pre-known, the light rays can be easily directed based on the predefined direction of collimation and the given viewing direction.

Some of the various implementations of the controllable backlight unit will now be described without limiting the controllable backlight unit to such implementations only.

In one implementation, the controllable backlight unit comprises:
an array of light-emitting elements employed to emit light rays;
a plurality of reflective elements arranged to reflect the light rays along the optical path of the controllable backlight unit; and
an active diffusion layer on individual reflective surfaces of the plurality of reflective elements.

The term *"light-emitting element"* refers to a component that, in operation, emit light rays. Pursuant to embodiments of the present disclosure, various different types of light-emitting elements can be employed in said array. Examples of the light-emitting elements include, but are not limited to, light-emitting diodes (LEDs), organic LEDs (OLEDs), mini LEDs, and micro LEDs. The term *"reflective element"* refers to a structure having at least one reflective surface. In some implementations, a given reflective element forms a cavity in which a given light-emitting element of the controllable backlight unit is arranged. In other words, the given reflective element has at least one reflective surface that surrounds a respective light-emitting element along a plane that is perpendicular to the optical axis of the controllable backlight unit. The at least one reflective surface is aligned at an angle with respect to the optical axis of the controllable backlight unit. Said angle could, for example, lie in a range of 25 degrees to 65 degrees; more optionally, in a range of 30 degrees to 60 degrees. As a result of such an alignment of the at least one reflective surface, a part of light emanating from the respective light-emitting element that is incident upon the at least one reflective surface is reflected towards the active diffusion layer. It will be appreciated that said part of light could reflect multiple times before it exits the given reflective element. In other implementations, a given reflective element is in the form of a focussing mirror. In this regard, at least one reflective surface of the given reflective element can be made with a high quality factor, such that the light reflects with minimal attenuation. In some cases, the at least one reflective surface comprises a single, continuous reflective surface. One example of such a reflective surface is a truncated-cone-shaped reflective surface. In other cases, the at least one reflective surface comprises a plurality of reflective surfaces that are arranged one after another to form a partial enclosure. Said partial enclosure can be in a form of a truncated-cone-like cavity.

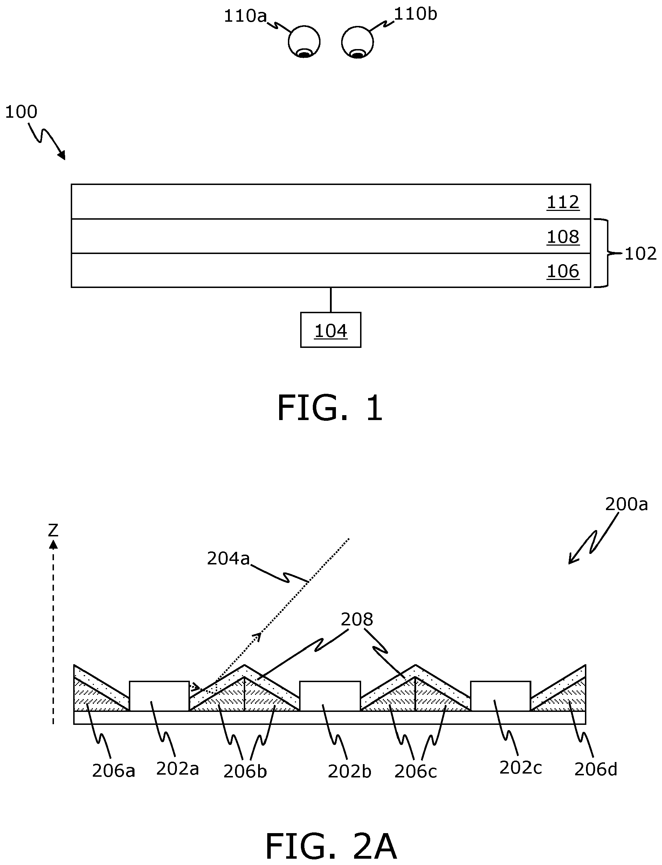

A technical benefit of the aforesaid implementation is that the active diffusion layer on the individual reflective surfaces of the plurality of reflective elements allows for a fine-tuned (i.e., a precise, localised) control over diffusion of the light rays, for producing the diffused light rays or the combination of the collimated light rays and the diffused light rays. Moreover, the plurality of reflective elements ensure minimal light loss by re-directing the light rays incident thereupon (from the array of light-emitting elements) along the optical path of the controllable backlight unit. This enhances the flexibility and efficiency of optical manipulation, enabling dynamic adjustments to the current viewing zone while minimising additional hardware complexity and preserving the compactness of the display system. An integration of the plurality of reflective elements with the active diffusion layer reduces the need for additional optical components, resulting in a compact design of the controllable backlight unit. This implementation has also been illustrated in conjunction with FIG. 2A, for the sake of better understanding and clarity.

In another implementation, the controllable backlight unit comprises:
an array of light-emitting elements employed to emit light rays; and
an array of collimating lenses arranged on an optical path of the array of light-emitting elements,
wherein the collimating lenses of said array are individually controllable, to control an extent of collimation and diffusion of the light rays.

In this regard, when the collimating lenses are individually controllable, their optical properties can be dynamically adjusted to control the extent of collimation or diffusion of the light rays. This allows the controllable backlight unit to selectively produce any one of: the collimated light rays, the diffused light rays, the combination of the collimated light rays and the diffused light rays. Such collimating lenses are often designed with advanced materials or mechanisms, such as liquid crystal (LC) layers or deformable optics, to enable a level of control on collimation or diffusion of the light rays. For example, LC lenses or electrically-tunable lenses can be employed, as these can dynamically adjust their refractive index or curvature for optical manipulation.

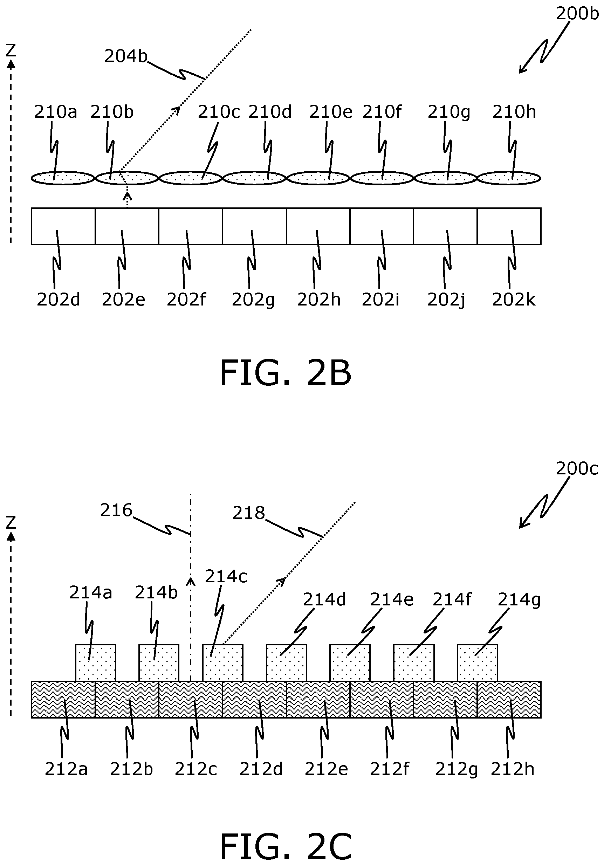

A technical benefit of the aforesaid implementation is individualised light control, as each collimating lens in said array can be independently adjusted to control the extent of collimation and diffusion of the light rays. This allows for precise optical manipulation, enabling dynamic adjustments to the current viewing zone while minimising additional hardware complexity and preserving the compactness of the display system. This implementation has also been illustrated in conjunction with FIG. 2B, for the sake of better understanding and clarity.

In yet another implementation, the controllable backlight unit comprises:
a first layer of collimated light sources; and
a second layer of diffused light sources, wherein a given diffused light source is arranged at a gap between adjacent collimated light sources.

In this regard, the collimated light sources, in operation, emit the collimated light rays, whereas diffused light sources, in operation, emit the diffused light rays. When only the collimated light rays are to be produced by the controllable backlight unit, the first layer of collimated light sources can be activated. When only the diffused light rays are to be produced by the controllable backlight unit, the second layer of diffused light sources can be activated. When the combination of the collimated light rays and the diffused light rays is to be produced by the controllable backlight unit, both the first layer and the second layer can be activated. Optionally, the first layer of collimated light sources is implemented as a collimator arranged on an optical path of a plurality of light-emitting elements. The collimator can be implemented as a lenslet array, a lenslet sheet, or similar. A lenslet array comprises a plurality of lenslets (namely, small, individual lenses) that are arranged in the form of a grid or some other pattern. A lenslet sheet also comprises a plurality of lenslets arranged in the form of a grid or some other pattern, but is typically more flexible than lenslet arrays. It will be appreciated that a size of a lenslet in a lenslet array or a lenslet sheet may depend on a size of the light-emitting elements. Such collimators are well-known in the art.

A technical benefit of the aforesaid implementation is that a dual-layer design allows for the simultaneous production of the collimated light rays and the diffused light rays. A placement of the diffused light sources at the gaps between the adjacent collimated light sources ensures even illumination across the LCD device, reducing shadowing or uneven brightness. A separation of the collimated light sources and the diffused light sources into distinct layers simplifies a control mechanism, as each layer can be independently activated as and when required. Moreover, by using separate layers for the collimated light sources and the diffused light sources, the design of the controllable backlight unit avoids a need for complex optical components such as active diffusion layers or individually controllable lenses. This implementation has also been illustrated in conjunction with FIG. 2C, for the sake of better understanding and clarity.

Apart from the controllable backlight unit, the LCD device optionally further comprises an LCD panel, wherein the LCD panel comprises: a colour filter array; a liquid crystal (LC) layer comprising a plurality of LC cells; at least one linear polarizer arranged on an optical path of the LC layer; and a drive circuit employed to individually control the plurality of LC cells of the LC layer. In some implementations, the at least one linear polarizer comprises a single linear polarizer, and the controllable backlight unit is configured to emit light rays having a polarization orientation that is different from a polarization orientation of the single linear polarizer. Thus, in such implementations, the light rays produced by the controllable backlight unit are typically already polarized. However, in other implementations, the at least one linear polarizer comprises a first linear polarizer and a second linear polarizer, wherein a polarization orientation of the first linear polarizer is different from a polarization orientation of the second linear polarizer. In such implementations, the LC layer of the LC panel is arranged between the first linear polarizer and the second linear polarizer.

The at least one processor controls an overall operation of the display system. The at least one processor is communicably coupled to the LCD device (specifically, to a drive circuit of the controllable backlight unit). Optionally, the at least one processor is implemented as a processor of the LCD device. Alternatively, optionally, the at least one processor is implemented as a processor of a computing device that is communicably coupled to the LCD device. Examples of the computing device include, but are not limited to, a laptop, a desktop, a tablet, a phablet, a personal digital assistant, a workstation, and a console. Yet alternatively, optionally, the at least one processor is implemented as a cloud server (namely, a remote server) that provides a cloud computing service.

Optionally, the at least one processor is configured to obtain the information indicative of the relative location of the first eye and of the second eye of the individual one of the at least one user, from a tracker, wherein the at least one processor is communicably coupled to the tracker. In some cases, the display system comprises the tracker. The term *"tracker"* refers to specialised equipment for detecting and/or tracking a location of at least a given eye of a given user. The term *"given* eye" encompasses a first eye and a second eye of the given user.

Optionally, the tracker is implemented as at least one tracking camera. The at least one tracking camera may comprise at least one of: at least one visible-light camera, at least one infrared (IR) camera, at least one depth camera. Examples of such a visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of such a depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracker. When different types of images captured by the various different types of tracking cameras are utilised, a location of the given eye of the given user can be determined highly accurately, as results obtained from one type of image can be used to refine results obtained from another type of image. Herein, these different types of images constitute tracking data collected by the tracker and may be in the form of at least one of: visible-light images, IR images, depth images. It will be appreciated that the tracker tracks both eyes of the given user with significantly high accuracy and precision, such that an error in determining the relative location may, for example, be minimised to within a tolerance range of approximately (+/-) 8 millimetres. In other implementations, the information indicative of the relative location of the first eye and of the second eye of the individual one of the at least one user is pre-known to the at least one processor, for example, in a case when a location of the individual one of the at least one user is fixed. It is to be noted that employing the tracker is optional, and it is just one of many ways of obtaining the information indicative of the relative location. For example, when a position of the individual one of the at least one user is fixed or otherwise is pre-known to the at least one processor, employing the display system is still beneficial.

In some implementations, the light field image is generated by the at least one processor itself, based on the relative location of the first eye and of the second eye of the individual one of the at least one user with respect to the image plane. In other implementations, the light field image is pre-generated and pre-stored at a data repository wherefrom it is retrieved by the at least one processor, the data repository being communicably coupled to the at least one processor. The data repository may be implemented as a memory of the at least one processor, a cloud-based database, or similar.

It will be appreciated that the at least one processor is configured to display the light field image via the LCD device to produce a synthetic light field. The light field image may be understood to be a two-dimensional (2D) image comprising a plurality of pixels, wherein a first set of pixels from amongst the plurality of pixels is responsible for generating a first part of the synthetic light field that corresponds to the first eye, and a second set of pixels from amongst the plurality of pixels is responsible for generating a second part of the synthetic light field that corresponds to the second eye. It will be appreciated that the pixels belonging to the first set are not arranged in a continuous manner across the light field image; similarly, the pixels belonging to the second set are also not arranged in a continuous manner across the light field image. Optionally, the pixels belonging to the first set and the pixels belonging to the second set are arranged in alternating vertical stripes across a horizontal field of view of the light field image, wherein each vertical stripe comprises one or more scanlines of pixels. This is because humans perceive depth mainly based on horizontal binocular parallax. Thus, in this way, the light field image would be considerably different as compared to a conventional 2D image that is displayed via conventional 2D displays, because the same light field image would comprise visual information corresponding to the first eye as well as the second eye of the individual one of the at least one user.

In some implementations, virtual content presented by the synthetic light field corresponds to a virtual environment comprising the at least one virtual object. Optionally, in this regard, the at least one processor is configured to generate the light field image from a perspective of the relative location of the first eye and the second eye of the individual one of the at least one user with respect to the image plane, by employing a three-dimensional (3D) model of the virtual environment. The term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, a virtual vehicle or part thereof, and virtual information. The term *"three-dimensional model"* of the virtual environment refers to a data structure that comprises comprehensive information pertaining to the at least one virtual object. Such comprehensive information is indicative of at least one of: a plurality of features of the at least one virtual object or its portions, a shape and a size of the at least one virtual object or its portions, a pose of the at least one virtual object or its portions, a material of the at least one virtual object or its portions, a colour and an optical depth of the at least one virtual object or its portions. The 3D model may be generated in the form of a 3D polygonal mesh, a 3D point cloud, a 3D surface cloud, a voxel-based model, or similar. Optionally, the at least one processor is configured to store the 3D model at the data repository.

The term *"synthetic light field"* refers to a light field that is produced (namely, generated) synthetically by the LCD device.

In other implementations, the at least one processor is configured to generate the light field image from a first virtual image and a second virtual image that are to be presented to the first eye and the second eye, respectively. In some cases, the at least one processor is configured to generate the first virtual image and the second virtual image from a perspective of the relative location of the first eye and of the second eye of the individual one of the at least one user with respect to the image plane, by employing a 3D model of the at least one virtual object. It will be appreciated that the relative location of the first eye and of the second eye with respect to the image plane indicate a viewing direction of the first eye and a viewing direction of the second eye, respectively. Therefore, the first virtual image and the second virtual image are generated based on these viewing directions. It will also be appreciated that the first virtual image and the second virtual image are generated in a form of two-dimensional (2D) user interface (UI) elements. The 2D UI elements could pertain to, for example, a virtual navigation tool, a virtual gadget, a virtual message, a virtual entity, a virtual entertainment media, virtual information, or similar.

Notably, the aforementioned steps of obtaining the information indicative of the relative location, generating or retrieving the light field image, and displaying the light field image, are repeatedly performed by the at least one processor for the given time period.

Since the information indicative of the relative location is repeatedly obtained by the at least one processor and information pertaining to (an extent of) the current viewing zone of the display system is pre-known to the at least one processor, it can be easily and accurately detected when the at least one of: the first eye, the second eye lies outside the current viewing zone of the display system during the given time period.

The term *"viewing zone"* of the display system refers to a three-dimensional (3D) zone within which eyes of a given user can be positioned to see a visual scene being presented by the display system. It will be appreciated that since said visual scene is presented by the at least one processor itself by way of displaying light field images, the information pertaining to the current viewing zone of the display system can be pre-known to the at least one processor.

When the at least one of: the first eye, the second eye lies within the current viewing zone of the display system, it means that a given eye of the individual one of the at least one user is at an optimal (namely, accurate) position relative to the LCD device, namely, within a region towards which the collimated light rays are typically directed. In such a case, the visual scene being presented to the individual one of the at least one user is clearly and highly-accurately visible. However, during the given time period, when the at least one of: the first eye, the second eye lies outside the current viewing zone of the display system, it means that the given eye of the individual one of the at least one user is shifted to a non-optimal position relative to the LCD device, namely, outside the region towards which the collimated light rays are typically directed. In such a case, the visual scene being presented to the individual one of the at least one user appears unclear or blurry, and no stereoscopic effect can be perceived by the first eye and/or the second eye from that position. In order to mitigate this potential problem, the controllable backlight unit is employed to produce the diffused light rays or the combination of the collimated light rays and the diffused light rays, and direct it towards the given eye of the individual one of the at least one user, in order to dynamically increase/expand the current viewing zone of the display system. Upon increasing (namely, expanding) the current viewing zone of the display system in the aforesaid manner, the given eye that had been shifted to the non-optimal position (during the given time period) would receive sufficient diffused light rays directed towards it, ensuring the visual scene remains clear and highly accurate to the given eye, as explained hereinbelow in detail.

Since the light field image is displayed by the at least one processor (for presenting the at least one virtual object), which region of the controllable backlight unit is being employed for presenting the at least one virtual object (or its part) to the first eye, and which region of the controllable backlight unit is being employed for presenting the at least one virtual object (or its part) to the second eye, are pre-known to the at least one processor. In other words, locations of those photo-emitting cells of the controllable backlight unit that are being employed to produce and direct to the first eye any one of: the diffused light rays, the combination of the collimated light rays and the diffused light rays, are pre-known to the at least one processor. Locations of such photo-emitting cells constitute the given first region of the controllable backlight unit. Similarly, locations of those photo-emitting cells of the controllable backlight unit that are being employed to produce and direct to the second eye any one of: the diffused light rays, the combination of the collimated light rays and the diffused light rays, are pre-known to the at least one processor. Locations of such photo-emitting cells constitute the given second region of the controllable backlight unit. By *"at least a part"* of the at least one virtual object, it means that either a part of the at least one virtual object is presented to the given eye, or an entirety of the at least one virtual object is presented to the given eye.

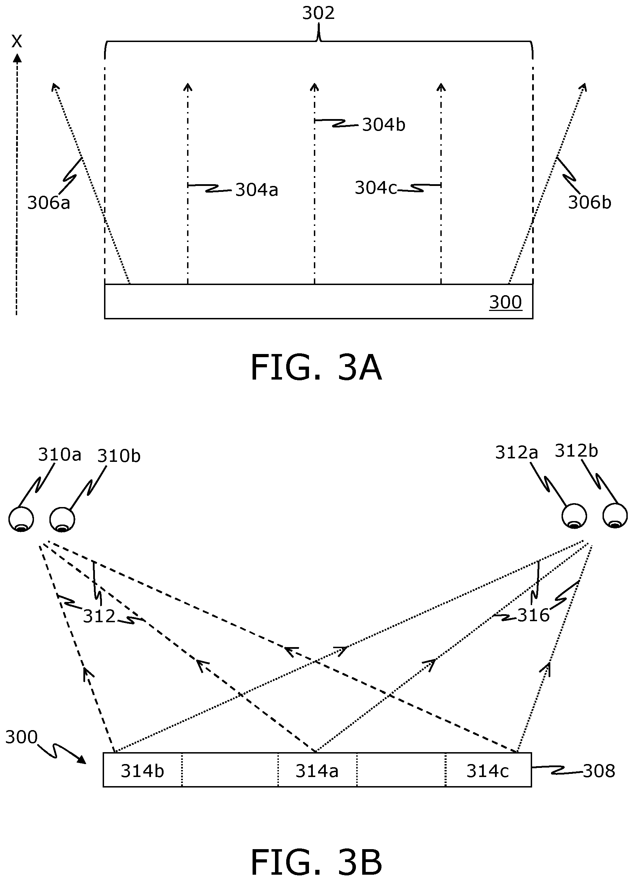

The given first region and the given second region of the controllable backlight unit are selectively controlled in order to produce and direct towards the first eye and the second eye, respectively, any one of: the diffused light rays, the combination of the collimated light rays and the diffused light rays. Beneficially, due to this, the current viewing zone of the display system can be dynamically expanded (along an optical axis of the display system) in a manner that the at least one of: the first eye, the second eye, that had been shifted to the non-optimal position (during the given time period) would now receive sufficient light rays (i.e., the diffused light rays alone or combined light rays) directed towards it. This ensures that even when the first eye and the second eye lie outside the current viewing zone of the display system, the visual scene appears clear and highly accurate to the first eye and the second eye of the individual one of the at least one user, and the first eye and the second eye would perceive a stereoscopic effect in a highly realistic manner, when viewing corresponding virtual images; unlike in case of the prior art, where a stereoscopic effect is perceived only when the first eye and the second eye are located within a typical, narrow viewing zone of the display system due to a collimated light-based backlight unit, and any deviation from such a typical, narrow viewing zone resulted in a loss of the stereoscopic effect or degradation of an overall visual quality of virtual images being displayed to the first eye and the second eye. This has also been illustrated in conjunction with FIG. 3B, for the sake of better understanding and clarity. It will be appreciated that that the current viewing zone can change dynamically because of the controllable backlight unit.

In some cases, when the at least one of: the first eye, the second eye of the individual one of the at least one user lies outside the current viewing zone, it is preferable to control the controllable backlight unit to produce and direct the diffused light rays towards the at least one of: the first eye, the second eye. This is preferable because light rays need to spread (namely, scatter) to expand the current viewing zone such that the at least one of: the first eye, the second eye are accommodated for perceiving the stereoscopic effect.

However, in other cases, when the at least one of: the first eye, the second eye lies outside the current viewing zone, the controllable backlight unit can be controlled to produce and direct the combination of the collimated light rays and the diffused light rays towards the at least one of: the first eye, the second eye. This may, particularly, be beneficial when the overall brightness of the visual scene being presented to the individual one of the at least one user is to be increased, for example, to produce legible images when an outdoor lighting condition is very bright (for example, when the average intensity of ambient light lies in a range of 10000 lux to 25000 lux) or when there are significant number of users (namely, viewers). This may also be beneficial when eyes of some of the users lie outside the current viewing zone, while eyes of a remainder of the users lie within the current viewing zone. This is because the collimated light rays in said combination may be produced and directed towards eyes of users lying within the current viewing zone, for example, such as in a case when said users are within a central portion of a native viewing zone of the display system (as described later in detail).

It will be appreciated that the diffused light rays can be understood to be light rays that are diffused along a horizontal axis of the current viewing zone of the display system (i.e., horizontal diffusion of the light rays) and/or along a vertical axis of the current viewing zone of the display system (i.e., vertical diffusion of the light rays). Thus, the controllable backlight unit can be selectively controlled to produce horizontally-diffused light rays and/or vertically-diffused light rays. Beneficially, this may potentially expand the current viewing zone also along either or both of the horizontal axis and the vertical axis of the display system. It will also be appreciated that the controllable backlight unit can be beneficially designed to have a high transmittance, thereby allowing for a reduction in light wastage. Moreover, it can be beneficially designed to have a wide diffusion angle that lies in a range of 10 degrees to 20 degrees. These technical effects of high transmittance and wide-diffusion angle can be achieved by implementing the controllable backlight unit in various possible ways, for example, as described earlier.

Optionally, the display system further comprises an active optical element arranged on the optical path of the controllable backlight unit, wherein the at least one processor is configured to:
control a given first portion of the active optical element that lies on an optical path of the given first region of the controllable backlight unit, based on the relative location of the first eye of the individual one of the at least one user with respect to the image plane, to direct towards the first eye the any one of: (ii) the diffused light rays, (iii) the combination of the collimated light rays and the diffused light rays produced by the given first region of the controllable backlight unit; and
control a given second portion of the active optical element that lies on an optical path of the given second region of the controllable backlight unit, based on the relative location of the second eye of the individual one of the at least one user with respect to the image plane, to direct towards the second eye the any one of: (ii) the diffused light rays, (iii) the combination of the collimated light rays and the diffused light rays produced by the given second region of the controllable backlight unit.

The term *"active optical element"* refers to an optical element that is controllable for actively directing (namely, steering) light rays (whether the diffused light rays or the combination of the collimated light rays and the diffused light rays) incident thereupon towards a given viewing direction (namely, towards a given eye of a given user). A technical benefit of employing the active optical element is that it allows for very precise control and re-direction of the light rays towards the first eye and the second eye of the individual one of the at least one user. This potentially enables in presenting the at least one virtual object (or its part) in a highly accurate and realistic manner when displaying the light field image. By dynamically controlling the active optical element, the light rays are directed in a manner that eyes of the individual one of the at least one user would perceive an autostereoscopic effect highly realistically and accurately. This may also allow for producing the autostereoscopic effect even when the eyes of the individual one of the at least one user are located relatively far (for example, more than 1 metre away) from the LCD device or when the eyes lie outside the current viewing zone of the display system. It will be appreciated that the active optical element can be arranged on the optical path after the controllable backlight unit. This arrangement has been illustrated in conjunction with FIG. 1, for the sake of clarity and better understanding.

Optionally, the active optical element is implemented as a liquid-crystal (LC) optical element. The LC optical element enables directing the collimated light rays passing therethrough by adjusting a refractive index of an LC material in the LC optical element. In this regard, the refractive index of the LC material can be controlled electrically. Optionally, the LC optical element is implemented as at least one LC layer. In some implementations, the LC optical element could be implemented as two LC layers. In an example, the LC optical element may be implemented as a switchable LC shutter array. Electrically controlling the LC material to redirect the collimated light rays incident thereupon is well-known in the art. The technical benefit of implementing the LC optical element is that the LC material in the LC optical element could be easily and conveniently controlled (electrically) to direct the collimated light rays very precisely, irrespective of any relative location of the eyes of the individual one of the at least one user.

Optionally, the at least one user is a plurality of users, wherein the at least one processor is configured to:
during the given time period, detect when a given region of the controllable backlight unit is being employed to present two-dimensional (2D) virtual content; and
when it is detected that the given region of the controllable backlight unit is being employed to present the 2D virtual content,
   selectively control the given region of the controllable backlight unit to produce and direct towards eyes of each of the plurality of users any one of: (ii) the diffused light rays, (iii) the combination of the collimated light rays and the diffused light rays.

A technical benefit of this is that the 2D virtual content can be presented to the plurality of users in a convenient manner as there would not be any need for displaying different virtual images (representing the at least one virtual object) to a first eye and a second eye of each of the plurality of users (i.e., no stereoscopy is needed when presenting the 2D virtual content to the plurality of users); in other words, a same virtual image could be displayed to the first eye and the second eye of each of the plurality of users. Therefore, by selectively controlling the given region of the controllable backlight unit, any one of: the diffused light rays, the combination of the collimated light rays and the diffused light rays can be produced and directed towards the eyes, thereby expanding the current viewing zone. Beneficially, this enables each of the plurality of users to view the 2D virtual content clearly and accurately from their respective positions, irrespective of whether the first eye and the second eye of each of the plurality of users lie outside or within the current viewing zone of the display system. Producing and directing the diffused light rays is preferred in the case of presenting the 2D virtual content; however (as discussed earlier), in order to increase the overall brightness, the combination of the diffused light rays and the collimated light rays can also be produced and directed. Optionally, the at least one processor is configured to direct any one of: the diffused light rays, the combination of the collimated light rays and the diffused light rays can be produced and directed towards the eyes towards the eyes of each of the plurality of users, based on a relative location of the eyes of respective ones of the plurality of users with respect to the image plane of the LCD device. It is to be understood that when the 2D virtual content is presented to the plurality of users simultaneously, directing the diffused light rays to expand the current viewing zone may result in a reduction in a brightness level at which the 2D virtual content is presented to each of the plurality of users. However, such a reduction in the brightness level would be minimal due to the combination of the diffused light rays and the collimated light rays and the 2D virtual content would still be presented with a sufficiently high brightness level that can produce legible virtual images representing the 2D virtual content. It will be appreciated that since the 2D virtual content is to be displayed by the at least one processor itself, it can be easily known when the given region of the controllable backlight unit is being employed to present the 2D virtual content.

Optionally, the at least one processor is configured to:
during the given time period, detect when the at least one user is a single user, and when eyes of the single user lie within a native viewing zone of the display system, based on respective relative locations of the eyes of the single user with respect to the image plane; and
when it is detected that the at least one user is the single user, and that the eyes of the single user lie within the native viewing zone of the display system,
   selectively control at least one horizontally-peripheral region of the controllable backlight unit to produce and direct towards the eyes of the single user any one of: (ii) the diffused light rays, (iii) the combination of the collimated light rays and the diffused light rays.

In this regard, in some cases, the at least one user is actually a single user. In other cases, the at least one user is considered as the single user when there are multiple users, but only one of the multiple users is currently looking towards the image plane of the LCD device and other remaining user(s) is/are not currently looking towards the image plane of the LCD device. This is possible, for example, in a scenario where eyes of other remaining user(s) amongst the multiple users are closed temporarily, or the other remaining user(s) is/are sleeping (for example, in a case where the display system is implemented in a vehicle) or the other remaining user(s) is/are looking elsewhere (i.e., away from the image plane of the LCD device). For this, the tracking data collected by the tracker can be used to detect when the eyes of the other remaining users are closed. For instance, when the tracking data comprises images of a given eye of a given user, the at least one processor may extract multiple features from the images, such as a pupil, an eyelid curvature, an eyelash position, an eye shape, or a size of the eye. Detection of a closed eye can be based on the absence of the pupil in the images. The at least one processor may employ data processing algorithms such as edge-detection or feature detection to extract these features. Techniques for detecting an open state of the eyes and/or a closed state of the eyes using eye tracking are well-known in the art. Similarly, the at least one processor can determine gaze direction of the given user using the tracker to identify whether the given user is looking at the image plane where virtual images are to be presented. By repeatedly determining the gaze direction, the at least one processor can accordingly ascertain when the given user's gaze aligns with the image plane or when the given user's gaze is directed elsewhere.

The term *"native viewing zone"* refers to a default 3D zone within which the collimated light rays emitted by the controllable backlight unit can be viewed directly, without any additional active diffusion (by the controllable backlight unit) or optical modification (by the active optical element). Such a 3D zone is defined by intrinsic properties of collimated light sources of the controllable backlight unit, for example, such as its emission profile, optics, angular distribution of the collimated light rays, and the like. An example of the native viewing zone has also been illustrated in conjunction with FIG. 3A, for the sake of better understanding and clarity.

It will be appreciated that since information indicative of the respective relative locations is repeatedly obtained by the at least one processor (during the given time period) and information pertaining to the native viewing zone of the display system is pre-known to the at least one processor, it can be easily and accurately detected when the eyes of the single user lie within the native viewing zone of the display system during the given time period.

A technical benefit of selectively controlling the at least one horizontally-peripheral region of the controllable backlight unit is that any one of: the diffused light rays, the combination of the collimated light rays and the diffused light rays, can be produced and directed (namely, concentrated) towards the eyes of the single user, which otherwise would have been directed elsewhere where no other user is present, or towards temporarily-closed eyes of the other users or towards a user who is not currently looking towards the image plane of the LCD device (i.e., looking elsewhere). Therefore, it is beneficial to concentrate the diffused light rays or the combination towards the single user, when the eyes of the single user lie within the native viewing zone of the display system. This ensures that the eyes of the single user would perceive a stereoscopic effect in a highly realistic and accurate manner when viewing corresponding virtual images, and the at least one virtual object would be perceived with exceptionally high brightness and clarity. Optionally, the at least one processor is configured to direct the diffused light rays or the combination towards the eyes of the single user, based on a relative location of the eyes of the single user with respect to the image plane of the LCD device.

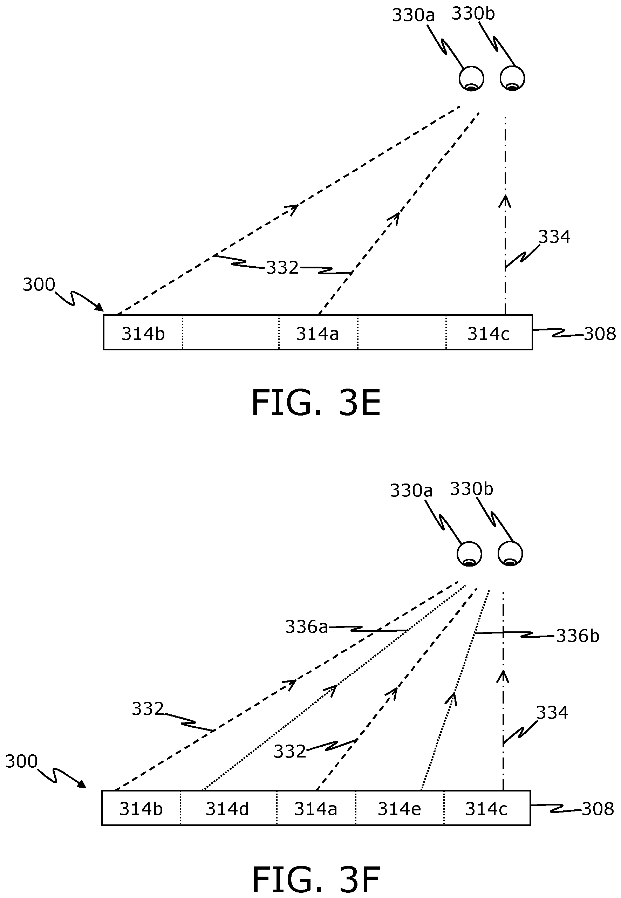

It is noteworthy that in some cases, only one horizontally-peripheral region of the controllable backlight unit is activated for horizontal concentration. This may be applicable in a scenario where the eyes of the single user are located at one corner of the native viewing zone (being within the native viewing zone). As an example, when the eyes of the single user are located at a right corner of the native viewing zone, a left-side horizontally-peripheral region and a central region of the controllable backlight unit are controlled to produce and direct the diffused light rays or the combination. Moreover, in such an example, a right-side horizontally-peripheral region of the controllable backlight unit (that corresponds to the right corner of the native viewing zone) is optionally controlled to produce and direct the collimated light rays towards the eyes of the single user, as discussed below in detail. This has also been illustrated in conjunction with FIG. 3E, for the sake of better understanding and clarity. In other cases, two horizontally-peripheral regions of the controllable backlight unit are controlled for concentrating the diffused light rays or the combination towards the eyes of the single user. This may be applicable in a scenario where the eyes of the single user are located at a central portion of the native viewing zone. Thus, in said scenario, both a left-side horizontally-peripheral region and a right-side horizontally-peripheral region of the controllable backlight unit are controlled for concentrating the diffused light rays or the combination towards the eyes of the single user. Moreover, in such an example, a central region of the controllable backlight unit (that corresponds to the central portion of the native viewing zone) is optionally controlled to produce and direct the collimated light rays towards the eyes, as discussed below in detail.

It will be appreciated that in the case of a single horizontally-peripheral region (namely, when the eyes of the single user lie at one side of the native viewing zone), a side on which the single horizontally-peripheral region of the controllable backlight unit lies, depends on the one side of the native viewing zone at which the eyes of the single user lie. It will also be appreciated that in some cases, when the eyes of the single user lie within the native viewing zone of the display system, producing and directing the diffused light rays towards said eyes is preferable at corner(s) of the controllable backlight unit. However (as discussed earlier), in order to increase the overall brightness, the combination of the diffused light rays and the collimated light rays can also be produced.

Optionally, the at least one processor is configured to:
when it is detected that the at least one user is the single user, and that the eyes of the single user lie within the native viewing zone of the display system,
detect when the eyes of the single user lie at a central portion of the native viewing zone of the display system; and
when it is detected that the eyes of the single user lie at the central portion of the native viewing zone of the display system,
   selectively control a central region of the controllable backlight unit to produce (i) the collimated light rays.

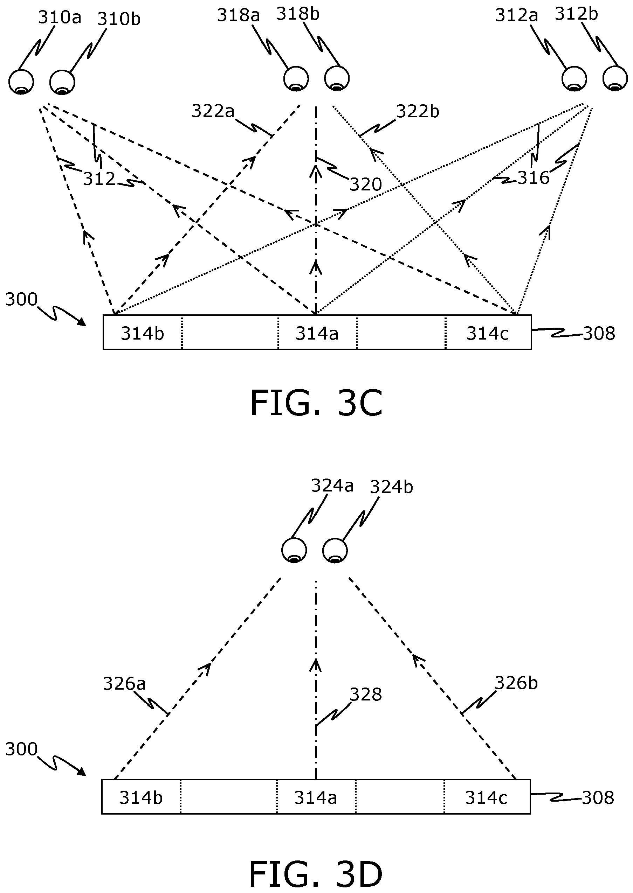

In this regard, since the eyes of the single user lie at the central portion of the native viewing zone, the central region of the controllable backlight unit naturally aligns with the eyes of the single user, and thus no active diffusion of light rays is needed for directing said light rays towards the eyes of the single user i.e., the collimated light rays can be produced and directed towards the eyes of the single user by selectively controlling the central region of the controllable backlight unit. This may potentially facilitate in saving processing resources and processing time of the at least one processor involved in the active diffusion of the light rays. This has also been illustrated in conjunction with FIGs. 3C and 3D, for the sake of better understanding and clarity.

It will be appreciated that since the information indicative of the respective relative locations is repeatedly obtained by the at least one processor (during the given time period) and the information pertaining to the native viewing zone of the display system is pre-known to the at least one processor, it can be easily and accurately detected that which portion of the native viewing zone the eyes of the single user would lie at. This allows for detecting when the eyes of the single user lie at the central portion of the native viewing zone.

Optionally, the at least one processor is configured to:
when it is detected that the at least one user is the single user, and that the eyes of the single user lie within the native viewing zone of the display system,
   selectively control at least one intermediate region of the controllable backlight unit lying between the at least one horizontally-peripheral region and a central region of the controllable backlight unit, to produce and direct towards the eyes of the single user the any one of: (ii) the diffused light rays, (iii) the combination of the collimated light rays and the diffused light rays,
wherein when selectively controlling the at least one intermediate region of the controllable backlight unit, the at least one processor is configured to vary an extent of horizontal diffusion of the diffused light rays and optionally, an extent of bending of the collimated light rays, based on at least one of: (a) relative locations of respective sub-regions of the at least one intermediate region of the controllable backlight unit with respect to an optical axis of the controllable backlight unit, (b) a viewing distance of the eyes of the single user from the LCD device.

A technical benefit of directing (namely, concentrating) any one of: the diffused light rays, the combination towards the eyes of the single user is that the eyes of the single user can be provided with additional light, which otherwise would have been directed elsewhere where no other user is present or towards temporarily-closed eyes of the other users. This ensures that the eyes of the single user would perceive a stereoscopic effect in a highly realistic and accurate manner when viewing corresponding virtual images, and the at least one virtual object would be perceived by the eyes with exceptionally high brightness and clarity. In some implementations, when the eyes of the single user lie at the central portion of the native viewing zone, the at least one intermediate region and the at least one horizontally-peripheral region of the controllable backlight unit are preferably activated for said concentration. In other implementations, when the eyes of the single user lie within the native viewing zone but do not lie at the central portion of the native viewing zone, the central region, the at least one intermediate region and the at least one horizontally-peripheral region of the controllable backlight unit are preferably activated for said concentration. This has also been illustrated in conjunction with FIG. 3F, for the sake of better understanding and clarity.

Furthermore, in cases where the diffused light rays are to be produced and directed towards the eyes, the extent of horizontal diffusion (namely, horizontal concentration) for an entirety of the diffused light rays is not the same (i.e., the entirety of diffused light rays are not horizontally diffused in a same manner), instead, the extent of horizontal diffusion of the diffused light rays can be varied. This means that different diffused light rays can have different extents of horizontal diffusion. For example, some diffused light rays can be more horizontally diffused, as compared to other remaining diffused light rays. In this regard, the farther a sub-region of the at least one intermediate region of the controllable backlight unit from the optical axis of the controllable backlight unit, the greater is the extent of horizontal diffusion of a given diffused light ray, and vice versa. This is likely because in cases where the eyes of the single user are located in the central portion or a near-central portion of the native viewing zone, sub-regions of the at least one intermediate region farther from the optical axis emit light rays that are not naturally aligned towards the eyes of the single user (namely, towards viewing directions of the eyes of the single user), thereby requiring more horizontal diffusion. On the other hand, for the same cases, sub-regions of the at least one intermediate region that are closer to the optical axis emit light rays that are relatively aligned towards the eyes of the single user, thereby requiring less horizontal diffusion.

Optionally, in cases where the collimated light rays are to be produced and directed towards the eyes (such as when the combination of the collimated light rays and the diffused light rays is to be produced and directed towards the eyes), the extent of bending of the collimated light rays is varied. In this regard, the farther a sub-region of the at least one intermediate region from the optical axis of the controllable backlight unit, the greater is the extent of horizontal bending of a given collimated light ray, and vice versa. This is likely because in cases where the eyes of the single user are located in the central portion or a near-central portion of the native viewing zone, sub-regions of the at least one intermediate region farther from the optical axis emit light rays that are not naturally aligned towards the eyes of the single user, thereby requiring more bending to reach the eyes. On the other hand, for the same cases, sub-regions of the at least one intermediate region that are closer to the optical axis emit light rays that are relatively aligned towards the eyes of the single user, thereby requiring less bending to reach the eyes.

However, it is noteworthy that when varying the extent of horizontal diffusion and, optionally, the extent of bending of the collimated light rays based on the relative locations of the respective sub-regions, the at least one processor optionally takes into account a location of the eyes of the single user within the native viewing zone. For example, there could be a case where two sub-regions of two corresponding intermediate regions of the controllable backlight unit are equidistant from the optical axis (for example, located symmetrically on opposite sides of the central region of the controllable backlight unit). In such a case, the eyes of the single user may be located towards one corner of the native viewing zone (being within the native viewing zone) and towards a side where one of the two corresponding intermediate regions lies. In this case, the extent of horizontal diffusion (and optionally, the extent of bending) required by these equidistant sub-regions may significantly differ. This variation arises because a direction and a spread of the diffused light rays (and optionally, the collimated light rays) from each sub-region is adjusted based on the location of the eyes of the single user in order to ensure that the diffused light rays (optionally, the collimated light rays) from each sub-region are accurately/optimally directed towards the eyes of the single user.

Furthermore, the lesser the viewing distance of the eyes of the single user from the LCD device, the greater is the extent of horizontal diffusion (optionally, the extent of bending), and vice versa. This is likely because when the single user is relatively closer to the LCD device (namely, when the viewing distance from the LCD device is less), the diffused light rays are to be traversed (and optionally, the collimated light rays are to be bent) with a higher angular deviation to reach the eyes of the single user, thereby requiring a higher horizontal diffusion (and optionally, a higher bending), as compared to a case when the single user is relatively far from the LCD device (namely, when the viewing distance from the LCD device is high). The viewing distance can be measured along an optical path of the LCD device. Information pertaining to the viewing distance can be obtained similarly as the relative locations are obtained.

A technical benefit of a variation of the extent of horizontal diffusion (and optionally, the extent of bending) is that it allows for fine-grained control over a direction and a spread of the diffused light rays (and optionally, the collimated light rays) emitted by different sub-regions of the at least one intermediate region of the controllable backlight unit. As a result, the display system can provide improved visual clarity and uniformity whilst accommodating a wide range of eye positions within the native viewing zone and minimising unnecessary energy consumption by avoiding over-diffusion or under-diffusion of the diffused light rays (and optionally, over-bending or under-bending of the collimated light rays).

Optionally, when selectively controlling the given first region and the given second region of the controllable backlight unit, the at least one processor is configured to:
vary an extent of horizontal diffusion of the diffused light rays and optionally, an extent of bending of the collimated light rays, based on at least one of: (a) relative locations of respective sub-regions of the given first region of the controllable backlight unit and relative locations of respective sub-regions of the given second region of the controllable backlight unit with respect to an optical axis of the controllable backlight unit, respectively, (b) a viewing distance of the first eye and of the second eye of the individual one of the at least one user from the LCD device.

In this regard, when the at least one of: the first eye, the second eye of the individual one of the at least one user lies outside the current viewing zone, the extent of horizontal diffusion of the diffused light rays (and optionally, the extent of bending of the collimated light rays) can be varied accordingly. In this regard, depending on a location of the at least one of: the first eye, the second eye, outside the current viewing zone, farther a given sub-region of the given first region and a given sub-region of the given second region with respect to the optical axis of the backlight unit, greater is the extent of horizontal diffusion (and optionally, the extent of bending of the collimated light rays), and vice versa. Hereinafter, "the given sub-region of the given first region and the given sub-region of the given second region" may sometimes be referred to as "sub-regions of the controllable backlight unit", for the sake of convenience and better understanding only.

In some cases, when the at least one of: the first eye, the second eye lies outside a right corner of the current viewing zone, diffused light rays (and optionally, collimated light rays) corresponding to sub-regions of the controllable backlight unit located towards a left corner of the controllable backlight unit may require a greater extent of horizontal diffusion (and optionally, a greater extent of bending of the collimated light rays), as compared to diffused light rays (and optionally, collimated light rays) corresponding to sub-regions of the controllable backlight unit located towards a right corner of the controllable backlight unit. This is because the at least one of: the first eye, the second eye is significantly far from the left corner of the controllable backlight unit, in comparison to the right corner of the controllable backlight unit. In this way, the extent of horizontal diffusion (and optionally, the extent of bending of the collimated light rays) gradually decreases while moving in a direction from the left corner of the controllable backlight unit to the right corner of the controllable backlight unit.

However, in other cases, when the at least one of: the first eye, the second eye lies outside a left corner of the current viewing zone, sub-regions of the controllable backlight unit located towards the right corner of the controllable backlight unit may require a greater extent of horizontal diffusion (and optionally, a greater extent of bending of the collimated light rays), as compared to sub-regions of the controllable backlight unit located towards the left corner of the controllable backlight unit. This is because the at least one of: the first eye, the second eye is significantly far from the right corner of the controllable backlight unit, in comparison to the left corner of the controllable backlight unit. In this way, the extent of horizontal diffusion (and optionally, the extent of bending of the collimated light rays) gradually decreases while moving in a direction from the right corner of the controllable backlight unit to the left corner of the controllable backlight unit.

Furthermore, the greater the viewing distance of eyes of the individual one of the at least one user from the LCD device, the greater is the extent of horizontal diffusion (and optionally, the extent of bending of the collimated light rays), and vice versa. This is likely because as a distance of a given user from the LCD device increases, an angular extent of the diffused light rays (and optionally, the extent of bending of the collimated light rays) also increases, and vice versa. The viewing distance can be measured along an optical path of the LCD device. Information pertaining to the viewing distance can be obtained similarly as the relative locations are obtained.

A technical benefit of a variation of the extent of horizontal diffusion (and optionally, the extent of bending) is that it allows for fine-grained control over a direction and a spread of the collimated light rays (and optionally, bending of the collimated light rays) emitted by different sub-regions of the controllable backlight unit. As a result, the display system can provide improved visual clarity and uniformity whilst accommodating a wide range of eye positions outside the current viewing zone of the display system, and minimising unnecessary energy consumption by avoiding over-diffusion or under-diffusion of the diffused light rays (and optionally, over-bending or under-bending of the collimated light rays). Moreover, even when the eyes of the given user lie outside the current viewing zone of the display system, it can be ensured that the eyes would still perceive a stereoscopic effect in a highly realistic and accurate manner when viewing corresponding virtual images, and the at least one virtual object would be perceived by the eyes with sufficient brightness and clarity.

Optionally, the display system further comprises a multiscopic optical element arranged on the optical path of the controllable backlight unit. When the display system also optionally comprises the active optical element (as discussed earlier), it would lead to following possible arrangements:
(i) controllable backlight unit -> multiscopic optical element -> active optical element, or
(ii) controllable backlight unit -> active optical element -> multiscopic optical element.

The term *"multiscopic optical element"* refers to a specialised optical element that is capable of directing light rays incident thereupon in different directions simultaneously. This allows the multiscopic optical element to present a multiscopic view to the individual one of the at least one user without any need for her/him to wear 3D glasses. Optionally, the multiscopic optical element is implemented as any one of: a parallax barrier, a lenticular array. The multiscopic optical element can be static or actively controllable. The multiscopic optical element and its forms are well-known in the art. A technical benefit of arranging the multiscopic optical element between the controllable backlight unit and the active optical element is that the current viewing zone of the display system can be dynamically expanded, whilst retaining a multiscopic effect (necessary for delivering depth perception to multiple users). This ensures that the multiple users can perceive clear and accurate multiscopic visuals without compromising on image quality or depth perception, even as their eye positions change.

It will be appreciated that an alternative to a conventional multiscopic optical element, the display system may comprise a specialised backlight unit comprising a first layer of lenticulars, a diffuser layer, and a second layer of lenticulars. The first layer of lenticulars focuses light emitted by an addressable light-emitting diode (LED) matrix, concentrating the light into near-singular light points on a subsequent diffuser layer. The diffuser layer is arranged to receive the focussed light from the first layer of lenticulars, and serves as an emission surface for light points. The second layer of lenticulars directs the light emitted by the diffuser layer toward specific directions. A steering of the light's direction is achieved by selectively activating specific LEDs within the addressable LED matrix. By leveraging such a configuration, the specialised backlight unit produces steerable collimated light, which is then passed through a traditional LCD panel. The LCD panel is capable of generating a full-resolution colour image, while stereoscopy or multiscopy is realised via temporal multiplexing. The temporal multiplexing allows alternating image frames to be directed toward different eyes (for example, one image frame towards a left eye and a next image frame towards a right eye), thus enabling depth perception without relying on the conventional multiscopic optical elements. Such a specialised backlight unit is described, for example, in *"*Modeling and optimizing through plenoptic function for the dual lenticular lens-based directional autostereoscopic display system" by Xueling Li, Shengzhi Qiang, Yuanqing Wang, and Xicai Li, published in Optics Express, Vol. 32, Issue 7, pp. 10925-10940, 2024, which has been incorporated herein by reference.

Optionally, when the display system comprises the multiscopic optical element that is actively controllable, and when it is detected that the given region of the controllable backlight unit is being employed to present the 2D virtual content (as discussed earlier), the at least one processor is configured to deactivate a corresponding portion of the multiscopic optical element. Optionally, when the display system comprises the multiscopic optical element, the at least one processor is configured to determine the given first region of the controllable backlight unit and the given second region of the controllable backlight unit, based on relative locations of individual multiscopic cells of the multiscopic optical element with respect to regions of the controllable backlight unit. It will be appreciated that a given multiscopic cell can be a lenticule (in a case when the multiscopic optical element is implemented as a lenticular array) or be a transparent portion (in a case when the multiscopic optical element is implemented as a parallax barrier). Optionally, when the display system further comprises the multiscopic optical element and the active optical element, the at least one processor is configured to control the corresponding first portion and the corresponding second portion of the active optical element, based further on the relative locations of the individual multiscopic cells of the multiscopic optical element.

The present disclosure also relates to the method as described above. Various embodiments and variants disclosed above, with respect to the aforementioned first aspect, apply *mutatis mutandis* to the method.

Optionally, the method further comprises:
controlling a given first portion of an active optical element that lies on an optical path of the given first region of the controllable backlight unit, based on the relative location of the first eye of the individual one of the at least one user with respect to the image plane, to direct towards the first eye the any one of: (ii) the diffused light rays, (iii) the combination of the collimated light rays and the diffused light rays produced by the given first region of the controllable backlight unit; and
controlling a given second portion of the active optical element that lies on an optical path of the given second region of the controllable backlight unit, based on the relative location of the second eye of the individual one of the at least one user with respect to the image plane, to direct towards the second eye the any one of: (ii) the diffused light rays, (iii) the combination of the collimated light rays and the diffused light rays produced by the given second region of the controllable backlight unit,
wherein the active optical element is arranged on the optical path of the controllable backlight unit.

Optionally, the at least one user is a plurality of users, wherein the method further comprises:
during the given time period, detecting when a given region of the controllable backlight unit is being employed to present two-dimensional (2D) virtual content; and
when it is detected that the given region of the controllable backlight unit is being employed to present the 2D virtual content,
   selectively controlling the given region of the controllable backlight unit to produce and direct towards eyes of each of the plurality of users any one of: (ii) the diffused light rays, (iii) the combination of the collimated light rays and the diffused light rays.

Optionally, the method further comprises:
during the given time period, detecting when the at least one user is a single user, and when eyes of the single user lie within a native viewing zone of the display system, based on respective relative locations of the eyes of the single user with respect to the image plane; and
when it is detected that the at least one user is the single user, and that the eyes of the single user lie within the native viewing zone of the display system,
   selectively controlling at least one horizontally-peripheral region of the controllable backlight unit to produce and direct towards the eyes of the single user any one of: (ii) the diffused light rays, (iii) the combination of the collimated light rays and the diffused light rays.

Optionally, the method further comprises:
when it is detected that the at least one user is the single user, and that the eyes of the single user lie within the native viewing zone of the display system,
detecting when the eyes of the single user lie at a central portion of the native viewing zone of the display system; and
when it is detected that the eyes of the single user lie at the central portion of the native viewing zone of the display system,
   selectively controlling a central region of the controllable backlight unit to produce (i) the collimated light rays.

Optionally, the method further comprises:
when it is detected that the at least one user is the single user, and that the eyes of the single user lie within the native viewing zone of the display system,
   selectively controlling at least one intermediate region of the controllable backlight unit lying between the at least one horizontally-peripheral region and a central region of the controllable backlight unit, to produce and direct towards the eyes of the single user the any one of: (ii) the diffused light rays, (iii) the combination of the collimated light rays and the diffused light rays,
wherein the step of selectively controlling the at least one intermediate region of the controllable backlight unit comprises varying an extent of horizontal diffusion of the diffused light rays and optionally, an extent of bending of the collimated light rays, based on at least one of: (a) relative locations of respective sub-regions of the at least one intermediate region of the controllable backlight unit with respect to an optical axis of the controllable backlight unit, (b) a viewing distance of the eyes of the single user from the LCD device.

Optionally, in the method, the step of selectively controlling the given first region and the given second region of the controllable backlight unit comprises:
varying an extent of horizontal diffusion of the diffused light rays and optionally, an extent of bending of the collimated light rays, based on at least one of: (a) relative locations of respective sub-regions of the given first region of the controllable backlight unit and relative locations of respective sub-regions of the given second region of the controllable backlight unit with respect to an optical axis of the controllable backlight unit, respectively, (b) a viewing distance of the first eye and of the second eye of the individual one of the at least one user from the LCD device.

In an embodiment, the controllable backlight unit comprises:
an array of light-emitting elements employed to emit light rays;
a plurality of reflective elements arranged to reflect the light rays along the optical path of the controllable backlight unit; and
an active diffusion layer on individual reflective surfaces of the plurality of reflective elements.

In another embodiment, the controllable backlight unit comprises:
an array of light-emitting elements employed to emit light rays; and
an array of collimating lenses arranged on an optical path of the array of light-emitting elements,
wherein the collimating lenses of said array are individually controllable, to control an extent of collimation and diffusion of the light rays.

In yet another embodiment, the controllable backlight unit comprises:
a first layer of collimated light sources; and
a second layer of diffused light sources, wherein a given diffused light source is arranged at a gap between adjacent collimated light sources.

### DETAILED DESCRIPTION OF THE DRAWINGS

Referring to FIG. 1, illustrated is an example implementation of a display system **100** incorporating a collimated and diffused backlight, in accordance with an embodiment of the present disclosure. The display system **100** comprises a liquid crystal display (LCD) device **102** and at least one processor (depicted as a processor **104**). The LCD device **102** comprises a controllable backlight unit **106** that is configured to selectively produce (i) collimated light rays, (ii) diffused light rays, (iii) a combination of the collimated light rays and the diffused light rays. Optionally, the LCD device **102** further comprises an LC panel **108,** wherein the LC panel **108** comprises: (i) a colour filter array; (ii) a liquid crystal (LC) layer comprising a plurality of LC cells; (iii) at least one linear polarizer arranged on an optical path of the LC layer; and (iv) a drive circuit employed to individually control the plurality of LC cells of the LC layer. Components of the LC panel **108** are not shown in FIG. 1 for sake of brevity. Optionally, the display system **100** further comprises an active optical element **112** arranged on an optical path of the controllable backlight unit **106.** The processor **104** is communicably coupled to the LCD device **102,** and optionally, to the active optical element **112.**

Notably, the processor **104** is configured to:
obtain information indicative of a relative location of a first eye **110a** and of a second eye **110b** of an individual one of at least one user with respect to an image plane of the LCD device **102;**
generate or retrieve a light field image, based on the relative location of the first eye **110a** and of the second eye **110b** of the individual one of the at least one user with respect to the image plane;
display the light field image via the LCD device **102** for presenting at least one virtual object;
repeat the step of obtaining, the step of generating or retrieving, and the step of displaying for a given time period;
during the given time period, detect when at least one of: the first eye **110a,** the second eye **110b** of the individual one of the at least one user lies outside a current viewing zone of the display system **100,** based on the relative location of the first eye **110a** and of the second eye **110b** of the individual one of the at least one user with respect to the image plane; and
when it is detected that at least one of: the first eye **110a,** the second eye **110b** of the individual one of the at least one user lies outside the current viewing zone of the display system **100,**
   determine a given first region of the controllable backlight unit **106** that is being employed for presenting at least a part of the at least one virtual object to the first eye **110a** of the individual one of the at least one user, and a given second region of the controllable backlight unit **106** that is being employed for presenting at least the part of the at least one virtual object to the second eye **110b** of the individual one of the at least one user; and
   selectively control the given first region of the controllable backlight unit **106** to produce and direct towards the first eye **110a** any one of: (ii) the diffused light rays, (iii) the combination of the collimated light rays and the diffused light rays, whilst selectively controlling the given second region of the controllable backlight unit **106** to produce and direct towards the second eye **110b** any one of: (ii) the diffused light rays, (iii) the combination of the collimated light rays and the diffused light rays.

It may be understood by a person skilled in the art that FIG. 1 merely depict an example implementation (out of many possible implementations) of the display system **100,** for sake of clarity, which should not unduly limit the scope of the claims herein. It is to be understood that the specific implementation of the display system **100** is not to be construed as limiting it to specific numbers or types of controllable backlight units, processors, and active optical elements. The person skilled in the art will recognize many variations, alternatives, and modifications of embodiments of the present disclosure.

Referring to FIGs. 2A, 2B, and 2C, illustrated are various example implementations of a controllable backlight unit **200a, 200b,** and **200c,** respectively, in accordance with various embodiments of the present disclosure. With reference to FIGs. 2A-2C, **'Z'** represents an optical axis of the controllable backlight units **200a, 200b,** and **200c.**

With reference to FIG. 2A, the controllable backlight unit **200a** comprises: an array of light-emitting elements **202a, 202b,** and **202c** employed to emit light rays (depicted as a single light ray **204a** emitted by the light-emitting element **202a,** using a dotted line with arrows, for sake of simplicity and clarity); a plurality of reflective elements (for example, depicted as reflective elements **206a, 206b, 206c,** and **206d** using a backslash pattern) arranged to reflect the light rays (for example, the single light ray **204a**) along an optical path of the controllable backlight unit **200a;** and an active diffusion layer **208** (depicted using a dotted pattern) on individual reflective surfaces of the plurality of reflective elements **206a-d.** It will be appreciated that the array of light-emitting elements **202a-c** is shown as a one-dimensional (1D) array, for sake of simplicity and better understanding only. Moreover, in reality, numerous light rays (for example, ranging from hundreds to thousands) are emitted by each of the plurality of light-emitting elements **202a-c.** However, in FIG. 2A, for sake of simplicity and understanding, only the single light ray **204a** is depicted.

With reference to FIG. 2B, the controllable backlight unit **200b** comprises: an array of light-emitting elements **202d, 202e, 202f, 202g, 202h, 202i, 202j,** and **202k** employed to emit light rays (depicted as a single light ray **204b** emitted by the light-emitting element **202e,** using a dotted line with arrows, for sake of simplicity and clarity); and an array of collimating lenses **210a, 210b, 210c, 210d, 210e, 210f, 210g,** and **210h** arranged on an optical path of the array of light-emitting elements **202d-k,** respectively, wherein the collimating lenses **210a-h** of said array are individually controllable, to control an extent of collimation and diffusion of the light rays (for example, the single light ray **204b**). It will be appreciated that the array of light-emitting elements **202d-k** and the array of collimating lenses **210a-h** are shown as a 1D array, for sake of simplicity and better understanding only. Moreover, in reality, numerous light rays (for example, ranging from hundreds to thousands) are emitted by each of the plurality of light-emitting elements **202d-k.** However, in FIG. 2A, for sake of simplicity and understanding, only the single light ray **204b** is depicted.

With reference to FIG. 2C, the controllable backlight unit **200c** comprises: a first layer of collimated light sources **212a, 212b, 212c, 212d, 212e, 212f, 212g,** and **212h** (depicted using a zig-zag pattern); and a second layer of diffused light sources **214a, 214b, 214c, 214d, 214e, 214f,** and **214g** (depicted using a dotted pattern), wherein a given diffused light source (from amongst the diffused light sources **214a-g)** is arranged at a gap between adjacent collimated light sources (from amongst the collimated light sources **212a-h**), wherein a given collimated light source, in operation, emits collimated light rays (depicted as a single collimated light ray **216** using a dotted line with an arrow, for sake of simplicity and clarity), whereas the given diffused light source, in operation, emits diffused light rays (depicted as a single diffused light ray **218** using a dotted line with an arrow, for sake of simplicity and clarity).

FIGs. 2A-2C are merely examples, which should not unduly limit the scope of the claims herein. The person skilled in the art will recognize many variations, alternatives, and modifications of embodiments of the present disclosure.

Referring to FIG. 3A, illustrated is an exemplary side view of a display system **300** incorporating a collimated and diffused backlight, in accordance with an embodiment of the present disclosure. The side view shows an extent of a native viewing zone **302** of the display system **300** along an optical axis **X** of the display system **300.** The side view also shows a combination of collimated light rays **304a, 304b,** and **304c** (depicted using dash-dot lines with arrows), and diffused light rays **306a** and **306b** (depicted using dotted lines with arrows) emitted by a controllable backlight unit (not shown in FIG. 3A) of the display system **300.** It will be appreciated that a current viewing zone of the display system **300** can change dynamically, because of the controllable backlight unit. For example, in a scenario depicted in FIG. 3A, the current viewing zone can be expanded (from the native viewing zone **302**) due to emission of the diffused light rays **306a-b.** The controllable backlight unit has been shown in FIGs. 3B, 3C, 3D, 3E, and 3F. With reference to FIGs. 3B-3F, the display system **300** comprises a controllable backlight unit **308.**

Referring to FIGs. 3B and 3C, illustrated are different example scenarios of how a controllable backlight unit **308** of the display system **300** is selectively controlled to produce and direct light rays towards eyes of various users, in accordance with an embodiment of the present disclosure.

With reference to FIGs. 3B and 3C, a first eye **310a** and a second eye **310b** of a first user are shown to lie outside the native viewing zone **302** (as shown in FIG. 3A). Similarly, a first eye **312a** and a second eye **312b** of a second user are also shown to lie outside the native viewing zone **302.** For the first user, a central region **314a** and two horizontally-peripheral regions **314b** and **314c** of the controllable backlight unit **308** are controlled to produce and direct (namely, horizontally concentrate or horizontally diffuse) diffused light rays **312** (depicted using dashed lines with arrows) towards the eyes **310a-b** of the first user. It will be appreciated that an extent of horizontal diffusion of the diffused light rays **312** is varied, depending on relative locations of regions of the controllable backlight unit **308** with respect to the eyes **310a-b** of the first user. For sake of simplicity and convenience only, three collimated light rays are shown to be diffused and directed towards a given user. Typically, hundreds to thousands of collimated light rays are diffused and directed towards the given user.

For the second user, the central region **314a** and the two horizontally-peripheral regions **314b-c** of the controllable backlight unit **308** are controlled to produce and direct diffused light rays **316** (depicted using dotted lines with arrows) towards the eyes **312a-b** of the second user. It will be appreciated that an extent of horizontal diffusion of the diffused light rays **316** is varied, depending on relative locations of regions of the controllable backlight unit **308** with respect to the eyes **312a-b** of the second user.

With reference to FIG. 3C, a first eye **318a** and a second eye **318b** of a third user are shown to lie within the native viewing zone **302** (as shown in FIG. 3A) such that the eyes **318a-b** of the third user lie at a central portion of the native viewing zone **302.** For the third user, the central region **314a** of the controllable backlight unit **308** is controlled to produce and direct collimated light rays **320** (depicted using a dash-dot line with an arrow) towards the eyes **318a-b** of the third user. Simultaneously, the two horizontally-peripheral regions **314b-c** of the controllable backlight unit **308** are controlled to produce and direct diffused light rays **322a** and **322b** towards the eyes **318a-b** of the third user.

Referring to FIGs. 3D, 3E, and 3F, illustrated are different example scenarios of how a controllable backlight unit **308** of the display system **300** is selectively controlled to produce and direct light rays towards eyes of a single user, in accordance with an embodiment of the present disclosure.

With reference to FIG. 3D, a first eye **324a** and a second eye **324b** of a single user are shown to lie at a central portion of the native viewing zone **302** (as shown in FIG. 3A) of the display system **300.** For the single user, two horizontally-peripheral regions **314b-c** of the controllable backlight unit **308** are controlled to produce and direct (namely, horizontally concentrate) diffused light rays **326a** and **326b** (depicted using dashed lines with arrows) towards the eyes **324a-b** of the single user. Simultaneously, the central region **314a** of the controllable backlight unit **308** is controlled to produce and direct collimated light rays **328** (depicted using a dash-dot line with arrows) towards the eyes **324a-b** of the single user.

With reference to FIGs. 3E and 3F, a first eye **330a** and a second eye **330b** of a single user are shown to lie at a right-side portion of the native viewing zone **302** (as shown in FIG. 2A) of the display system **300.** For the single user, the central region **314a** and a horizontally-peripheral region **314b** of the controllable backlight unit **308** are controlled to produce and direct diffused light rays **332** (depicted using dashed lines with arrows) towards the eyes **330a-b** of the single user. Simultaneously, another horizontally-peripheral region **314c** of the controllable backlight unit **308** is controlled to produce and direct collimated light rays **334** (depicted using a dash-dot line with arrows) towards the eyes **330a-b** of the single user. The another horizontally-peripheral region **314c** lies on a side at which the eyes **330a-b** of the single user lie i.e., the right-side portion of the native viewing zone **302.** It will be appreciated that an extent of horizontal diffusion of the diffused light rays **332** is varied, depending on relative locations of regions of the controllable backlight unit **308** with respect to the eyes **330a-b** of the single user.

With reference to FIG. 3F, for the single user, two intermediate regions **314d** and **314e** of the controllable backlight unit **308** are controlled to also produce and direct diffused light rays **336a** and **336b** (depicted using dotted lines with arrows). The intermediate region **314d** lies between the horizontally-peripheral region **314b** and the central region **314a** of the controllable backlight unit **308.** The intermediate region **314e** lies between the horizontally-peripheral region **314c** and the central region **314a** of the controllable backlight unit **308.**

FIGs. 3A-3F are merely examples, which should not unduly limit the scope of the claims herein. The person skilled in the art will recognize many variations, alternatives, and modifications of embodiments of the present disclosure.

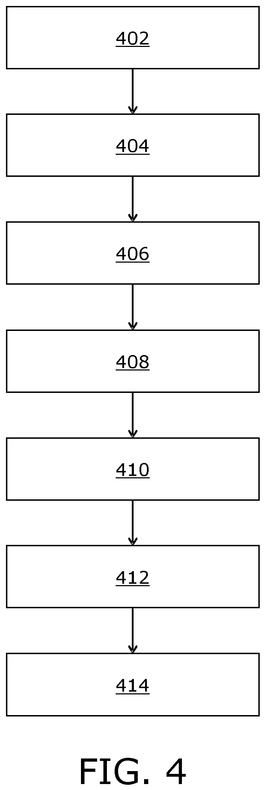

Referring to FIG. 4, illustrated are steps of a method for displaying light field images by employing a display system incorporating a collimated and diffused backlight, in accordance with an embodiment of the present disclosure. At step **402,** information indicative of a relative location of a first eye and of a second eye of an individual one of at least one user with respect to an image plane of a liquid crystal display (LCD) device, is obtained, wherein the LCD device comprises a controllable backlight unit that is configured to selectively produce (i) collimated light rays, (ii) diffused light rays, (iii) a combination of the collimated light rays and the diffused light rays. At step **404,** a light field image is generated or retrieved, based on the relative location of the first eye and of the second eye of the individual one of the at least one user with respect to the image plane. At step **406,** the light field image is displayed via the LCD device for presenting at least one virtual object. At step **408,** the step of obtaining, the step of generating or retrieving, and the step of displaying are repeated for a given time period. During the given time period, at step **410,** it is detected when at least one of: the first eye, the second eye of the individual one of the at least one user lies outside a current viewing zone of the display system, based on the relative location of the first eye and of the second eye of the individual one of the at least one user with respect to the image plane. When it is detected that at least one of: the first eye, the second eye of the individual one of the at least one user lies outside the current viewing zone of the display system, at step **412,** a given first region and a given second region of the controllable backlight unit is determined, the given first region being employed for presenting at least a part of the at least one virtual object to the first eye of the individual one of the at least one user, and the given second region being employed for presenting at least the part of the at least one virtual object to the second eye of the individual one of the at least one user. At step **414,** the given first region of the controllable backlight unit is selectively controlled to produce and direct towards the first eye any one of: (ii) the diffused light rays, (iii) the combination of the collimated light rays and the diffused light rays, whilst selectively controlling the given second region of the controllable backlight unit to produce and direct towards the second eye any one of: (ii) the diffused light rays, (iii) the combination of the collimated light rays and the diffused light rays.

The aforementioned steps are only illustrative and other alternatives can also be provided where one or more steps are added, one or more steps are removed, or one or more steps are provided in a different sequence without departing from the scope of the claims herein.

## Claims

1. A display system (100, 300) comprising:
a liquid crystal display (LCD) device (102) comprising a controllable backlight unit (106, 200a-c, 308) that is configured to selectively produce (i) collimated light rays (216, 304a-c, 320, 328, 334), (ii) diffused light rays (218, 306a-b, 312, 316, 322a-b, 326a-b, 332), (iii) a combination of the collimated light rays and the diffused light rays; and
at least one processor (104) configured to:
obtain information indicative of a relative location of a first eye (110a, 310a, 312a, 318a, 324a, 330a) and of a second eye (110b, 310b, 312b, 318b, 324b, 330b) of an individual one of at least one user with respect to an image plane of the LCD device;
generate or retrieve a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
display the light field image via the LCD device for presenting at least one virtual object;
repeat the step of obtaining, the step of generating or retrieving, and the step of displaying for a given time period;
during the given time period, detect when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the light rays emitted by the controllable backlight unit are being currently directed; and
when it is detected that at least one of: the first eye, the second eye of the individual one of the at least one user lies outside the current viewing zone of the display system,
determine a given first region of the controllable backlight unit that is being employed for presenting at least a part of the at least one virtual object to the first eye of the individual one of the at least one user, and a given second region of the controllable backlight unit that is being employed for presenting at least the part of the at least one virtual object to the second eye of the individual one of the at least one user; and
selectively control the given first region of the controllable backlight unit to produce and direct towards the first eye any one of: (ii) the diffused light rays, (iii) the combination of the collimated light rays and the diffused light rays, whilst selectively controlling the given second region of the controllable backlight unit to produce and direct towards the second eye any one of: (ii) the diffused light rays, (iii) the combination of the collimated light rays and the diffused light rays.

2. The display system (100, 300) of claim 1, further comprising an active optical element (112) arranged on the optical path of the controllable backlight unit (106, 200a-c, 308), wherein the at least one processor (104) is configured to:
control a given first portion of the active optical element that lies on an optical path of the given first region of the controllable backlight unit, based on the relative location of the first eye (110a, 310a, 312a, 318a, 324a, 330a) of the individual one of the at least one user with respect to the image plane, to direct towards the first eye the any one of: (ii) the diffused light rays (218, 306a-b, 312, 316, 322a-b, 326a-b, 332), (iii) the combination of the collimated light rays (216, 304a-c, 320, 328, 334) and the diffused light rays produced by the given first region of the controllable backlight unit; and
control a given second portion of the active optical element that lies on an optical path of the given second region of the controllable backlight unit, based on the relative location of the second eye (110b, 310b, 312b, 318b, 324b, 330b) of the individual one of the at least one user with respect to the image plane, to direct towards the second eye the any one of: (ii) the diffused light rays, (iii) the combination of the collimated light rays and the diffused light rays produced by the given second region of the controllable backlight unit.

3. The display system (100, 300) of any of the preceding claims, wherein the at least one user is a plurality of users, wherein the at least one processor (104) is configured to:
during the given time period, detect when a given region of the controllable backlight unit (106, 200a-c, 308) is being employed to present two-dimensional (2D) virtual content; and
when it is detected that the given region of the controllable backlight unit is being employed to present the 2D virtual content,
selectively control the given region of the controllable backlight unit to produce and direct towards eyes (110a-b, 310a-b, 312a-b, 318a-b, 324a-b, 330a-b) of each of the plurality of users any one of: (ii) the diffused light rays (218, 306a-b, 312, 316, 322a-b, 326a-b, 332), (iii) the combination of the collimated light rays (216, 304a-c, 320, 328, 334) and the diffused light rays.

4. The display system (100, 300) of any of the preceding claims, wherein the at least one processor (104) is configured to:
during the given time period, detect when the at least one user is a single user, and when eyes (318a-b, 326a-b, 330a-b) of the single user lie within a native viewing zone (302) of the display system, based on respective relative locations of the eyes of the single user with respect to the image plane, the native viewing zone being a zone within which the collimated light rays emitted by the controllable backlight unit can be viewed directly, without any additional active diffusion by the controllable backlight unit; and
when it is detected that the at least one user is the single user, and that the eyes of the single user lie within the native viewing zone of the display system,
selectively control at least one horizontally-peripheral region (314b-c) of the controllable backlight unit (308) to produce and direct towards the eyes of the single user any one of: (ii) the diffused light rays (322a-b, 326a-b, 332), (iii) the combination of the collimated light rays (320, 328, 334) and the diffused light rays.

5. The display system (100, 300) of claim 4, wherein the at least one processor (104) is configured to:
when it is detected that the at least one user is the single user, and that the eyes (318a-b, 324a-b) of the single user lie within the native viewing zone (302) of the display system,
detect when the eyes (110a-b, 310a-b, 312a-b, 318a-b, 324a-b, 330a-b) of the single user lie at a central portion of the native viewing zone of the display system; and
when it is detected that the eyes of the single user lie at the central portion of the native viewing zone of the display system,
selectively control a central region (314a) of the controllable backlight unit (308) to produce (i) the collimated light rays (320, 328).

6. The display system (100, 300) of claim 4 or 5, wherein the at least one processor (104) is configured to:
when it is detected that the at least one user is the single user, and that the eyes (330a-b) of the single user lie within the native viewing zone (302) of the display system,
selectively control at least one intermediate region (314d-e) of the controllable backlight unit (308) lying between the at least one horizontally-peripheral region (314b-c) and a central region (314a) of the controllable backlight unit, to produce and direct towards the eyes of the single user the any one of: (ii) the diffused light rays (332, 336a-b), (iii) the combination of the collimated light rays (334) and the diffused light rays,
wherein when selectively controlling the at least one intermediate region of the controllable backlight unit, the at least one processor is configured to vary an extent of horizontal diffusion of the diffused light rays and optionally, an extent of bending of the collimated light rays, based on at least one of: (a) relative locations of respective sub-regions of the at least one intermediate region of the controllable backlight unit with respect to an optical axis (Z) of the controllable backlight unit, (b) a viewing distance of the eyes of the single user from the LCD device.

7. The display system (100, 300) of any of the preceding claims, wherein when selectively controlling the given first region and the given second region of the controllable backlight unit (106, 200a-c, 308), the at least one processor (104) is configured to:
vary an extent of horizontal diffusion of the diffused light rays (218, 306a-b, 312, 316, 322a-b, 326a-b, 332) and optionally, an extent of bending of the collimated light rays (216, 304a-c, 320, 328, 334), based on at least one of: (a) relative locations of respective sub-regions of the given first region of the controllable backlight unit and relative locations of respective sub-regions of the given second region of the controllable backlight unit with respect to an optical axis (Z) of the controllable backlight unit, respectively, (b) a viewing distance of the first eye and of the second eye of the individual one of the at least one user from the LCD device.

8. The display system (100, 300) of any of the preceding claims, wherein the controllable backlight unit (200a) comprises:
an array of light-emitting elements (202a-c) employed to emit light rays (204a);
a plurality of reflective elements (206a-d) arranged to reflect the light rays along the optical path of the controllable backlight unit; and
an active diffusion layer (208) on individual reflective surfaces of the plurality of reflective elements.

9. The display system (100, 300) of any of claims 1-7, wherein the controllable backlight unit (200b) comprises:
an array of light-emitting elements (202d-k) employed to emit light rays (204b); and
an array of collimating lenses (210a-h) arranged on an optical path of the array of light-emitting elements,
wherein the collimating lenses of said array are individually controllable, to control an extent of collimation and diffusion of the light rays.

10. The display system (100, 300) of any of claims 1-7, wherein the controllable backlight unit (200c) comprises:
a first layer of collimated light sources (212a-h); and
a second layer of diffused light sources (214a-g), wherein a given diffused light source is arranged at a gap between adjacent collimated light sources.

11. A method comprising:
obtaining information indicative of a relative location of a first eye (110a, 310a, 312a, 318a, 324a, 330a) and of a second eye (110b, 310b, 312b, 318b, 324b, 330b) of an individual one of at least one user with respect to an image plane of a liquid crystal display (LCD) device (102), the LCD device comprising a controllable backlight unit (106, 200a-c, 308) that is configured to selectively produce (i) collimated light rays (216, 304a-c, 320, 328, 334), (ii) diffused light rays (218, 306a-b, 312, 316, 322a-b, 326a-b, 332), (iii) a combination of the collimated light rays and the diffused light rays;
generating or retrieving a light field image, based on the relative location of the first eye and of the second eye of the individual one of the at least one user with respect to the image plane, wherein the light field image comprises a plurality of pixels, a first set of pixels from amongst the plurality of pixels being employed to generate a first part of a synthetic light field that corresponds to the first eye, and a second set of pixels from amongst the plurality of pixels being employed to generate a second part of the synthetic light field that corresponds to the second eye;
displaying the light field image via the LCD device for presenting at least one virtual object;
repeating the step of obtaining, the step of generating or retrieving, and the step of displaying for a given time period;
during the given time period, detecting when at least one of: the first eye, the second eye of the individual one of the at least one user lies outside a current viewing zone of the display system, based on the relative location of the first eye and of the second eye of the individual one of the at least one user with respect to the image plane, the current viewing zone being a zone towards which the light rays emitted by the controllable backlight unit are being currently directed; and
when it is detected that at least one of: the first eye, the second eye of the individual one of the at least one user lies outside the current viewing zone of the display system,
determining a given first region of the controllable backlight unit that is being employed for presenting at least a part of the at least one virtual object to the first eye of the individual one of the at least one user, and a given second region of the controllable backlight unit that is being employed for presenting at least the part of the at least one virtual object to the second eye of the individual one of the at least one user; and
selectively controlling the given first region of the controllable backlight unit to produce and direct towards the first eye any one of: (ii) the diffused light rays, (iii) the combination of the collimated light rays and the diffused light rays, whilst selectively controlling the given second region of the controllable backlight unit to produce and direct towards the second eye any one of: (ii) the diffused light rays, (iii) the combination of the collimated light rays and the diffused light rays.

12. The method of claim 11, further comprising:
controlling a given first portion of an active optical element (112) that lies on an optical path of the given first region of the controllable backlight unit (106, 200a-c, 308), based on the relative location of the first eye of the individual one of the at least one user with respect to the image plane, to direct towards the first eye (110a, 310a, 312a, 318a, 324a, 330a) the any one of: (ii) the diffused light rays (218, 306a-b, 312, 316, 322a-b, 326a-b, 332), (iii) the combination of the collimated light rays (216, 304a-c, 320, 328, 334) and the diffused light rays produced by the given first region of the controllable backlight unit; and
controlling a given second portion of the active optical element that lies on an optical path of the given second region of the controllable backlight unit, based on the relative location of the second eye (110b, 310b, 312b, 318b, 324b, 330b) of the individual one of the at least one user with respect to the image plane, to direct towards the second eye the any one of: (ii) the diffused light rays, (iii) the combination of the collimated light rays and the diffused light rays produced by the given second region of the controllable backlight unit,
wherein the active optical element is arranged on the optical path of the controllable backlight unit.

13. The method of claim 11 or 12, wherein the at least one user is a plurality of users, and wherein the method further comprises:
during the given time period, detecting when a given region of the controllable backlight unit (106, 200a-c, 308) is being employed to present two-dimensional (2D) virtual content; and
when it is detected that the given region of the controllable backlight unit is being employed to present the 2D virtual content,
selectively controlling the given region of the controllable backlight unit to produce and direct towards eyes (110a-b, 310a-b, 312a-b, 318a-b, 324a-b, 330a-b) of each of the plurality of users any one of: (ii) the diffused light rays (218, 306a-b, 312, 316, 322a-b, 326a-b, 332), (iii) the combination of the collimated light rays (216, 304a-c, 320, 328, 334) and the diffused light rays.

14. The method of any of claims 11-13, further comprising:
during the given time period, detecting when the at least one user is a single user, and when eyes (318a-b, 326a-b, 330a-b) of the single user lie within a native viewing zone (302) of the display system, based on respective relative locations of the eyes of the single user with respect to the image plane, the native viewing zone being a zone within which the collimated light rays emitted by the controllable backlight unit can be viewed directly, without any additional active diffusion by the controllable backlight unit; and
when it is detected that the at least one user is the single user, and that the eyes of the single user lie within the native viewing zone of the display system,
selectively controlling at least one horizontally-peripheral region (314b-c) of the controllable backlight unit (308) to produce and direct towards the eyes of the single user any one of: (ii) the diffused light rays (322a-b, 326a-b, 332), (iii) the combination of the collimated light rays (320, 328, 334) and the diffused light rays.

15. The method of claim 14, further comprising:
when it is detected that the at least one user is the single user, and that the eyes (318a-b, 324a-b) of the single user lie within the native viewing zone (302) of the display system,
detecting when the eyes (110a-b, 310a-b, 312a-b, 318a-b, 324a-b, 330a-b) of the single user lie at a central portion of the native viewing zone of the display system; and
when it is detected that the eyes of the single user lie at the central portion of the native viewing zone of the display system,
selectively controlling a central region (314a) of the controllable backlight unit (308) to produce (i) the collimated light rays (320, 328).

16. The method of claim 14 or 15, further comprising:
when it is detected that the at least one user is the single user, and that the eyes (330a-b) of the single user lie within the native viewing zone (302) of the display system,
selectively controlling at least one intermediate region (314d-e) of the controllable backlight unit (308) lying between the at least one horizontally-peripheral region (314b-c) and a central region (314a) of the controllable backlight unit, to produce and direct towards the eyes of the single user the any one of: (ii) the diffused light rays (332, 336a-b), (iii) the combination of the collimated light rays (334) and the diffused light rays,
wherein the step of selectively controlling the at least one intermediate region of the controllable backlight unit comprises varying an extent of horizontal diffusion of the diffused light rays and optionally, an extent of bending of the collimated light rays, based on at least one of: (a) relative locations of respective sub-regions of the at least one intermediate region of the controllable backlight unit with respect to an optical axis (Z) of the controllable backlight unit, (b) a viewing distance of the eyes of the single user from the LCD device.

17. The method of any of claims 11-16, wherein the step of selectively controlling the given first region and the given second region of the controllable backlight unit (106, 200a-c, 308) comprises:
varying an extent of horizontal diffusion of the diffused light rays (218, 306a-b, 312, 316, 322a-b, 326a-b, 332) and optionally, an extent of bending of the collimated light rays (216, 304a-c, 320, 328, 334), based on at least one of: (a) relative locations of respective sub-regions of the given first region of the controllable backlight unit and relative locations of respective sub-regions of the given second region of the controllable backlight unit with respect to an optical axis (Z) of the controllable backlight unit, respectively, (b) a viewing distance of the first eye and of the second eye of the individual one of the at least one user from the LCD device.

18. The method of any of claims 11-17, wherein the controllable backlight unit (200a) comprises:
an array of light-emitting elements (202a-c) employed to emit light rays (204a);
a plurality of reflective elements (206a-d) arranged to reflect the light rays along the optical path of the controllable backlight unit; and
an active diffusion layer (208) on individual reflective surfaces of the plurality of reflective elements.

19. The method of any of claims 11-17, wherein the controllable backlight unit (200b) comprises:
an array of light-emitting elements (202d-k) employed to emit light rays (204b); and
an array of collimating lenses (210a-h) arranged on an optical path of the array of light-emitting elements,
wherein the collimating lenses of said array are individually controllable, to control an extent of collimation and diffusion of the light rays.

20. The method of any of claims 11-17, wherein the controllable backlight unit (200c) comprises:
a first layer of collimated light sources (212a-h); and
a second layer of diffused light sources (214a-g), wherein a given diffused light source is arranged at a gap between adjacent collimated light sources.

## Patentansprüche

1. Anzeigesystem (100, 300), umfassend:
eine Flüssigkristallanzeigevorrichtung (LCD-Vorrichtung) (102), die eine steuerbare Hintergrundbeleuchtungseinheit (106, 200a-c, 308) umfasst, die konfiguriert ist, um selektiv (i) kollimierte Lichtstrahlen (216, 304a-c, 320, 328, 334), (ii) diffuse Lichtstrahlen (218, 306a-b, 312, 316, 322a-b, 326a-b, 332), (iii) eine Kombination aus den kollimierten Lichtstrahlen und den diffusen Lichtstrahlen zu erzeugen; und
mindestens einen Prozessor (104), der konfiguriert ist zum:
Erhalten von Informationen, die eine relative Position eines ersten Auges (110a, 310a, 312a, 318a, 324a, 330a) und eines zweiten Auges (110b, 310b, 312b, 318b, 324b, 330b) eines Einzelnen von mindestens einem Benutzer in Bezug auf eine Bildebene der LCD-Vorrichtung angeben;
Erzeugen oder Abrufen eines Lichtfeldbildes auf der Grundlage der relativen Position des ersten Auges und des zweiten Auges des Einzelnen des mindestens einen Benutzers in Bezug auf die Bildebene, wobei das Lichtfeldbild eine Vielzahl von Pixeln umfasst, wobei ein erster Satz von Pixeln aus der Vielzahl von Pixeln eingesetzt wird, um einen ersten Teil eines synthetischen Lichtfeldes zu erzeugen, der dem ersten Auge entspricht, und wobei ein zweiter Satz von Pixeln aus der Vielzahl von Pixeln eingesetzt wird, um einen zweiten Teil des synthetischen Lichtfeldes zu erzeugen, der dem zweiten Auge entspricht;
Anzeigen des Lichtfeldbildes über die LCD-Vorrichtung zum Darstellen mindestens eines virtuellen Objekts;
Wiederholen des Schritts des Erhaltens, des Schritts des Erzeugens oder Abrufens und des Schritts des Anzeigens für eine gegebene Zeitspanne;
während der gegebenen Zeitspanne, Detektieren, wann mindestens eines von: dem ersten Auge, dem zweiten Auge des Einzelnen des mindestens einen Benutzers außerhalb einer aktuellen Betrachtungszone des Anzeigesystems liegt, auf der Grundlage der relativen Position des ersten Auges und des zweiten Auges des Einzelnen des mindestens einen Benutzers in Bezug auf die Bildebene, wobei die aktuelle Betrachtungszone eine Zone ist, auf die die von der steuerbaren Hintergrundbeleuchtungseinheit emittierten Lichtstrahlen derzeit gelenkt werden; und
wenn detektiert wird, dass mindestens eines von: dem ersten Auge, dem zweiten Auge des Einzelnen des mindestens einen Benutzers außerhalb der aktuellen Betrachtungszone des Anzeigesystems liegt,
Bestimmen eines gegebenen ersten Bereichs der steuerbaren Hintergrundbeleuchtungseinheit, der eingesetzt wird, um dem ersten Auge des Einzelnen des mindestens einen Benutzers zumindest einen Teil des mindestens einen virtuellen Objekts darzustellen, und eines gegebenen zweiten Bereichs der steuerbaren Hintergrundbeleuchtungseinheit, der eingesetzt wird, um dem zweiten Auge des Einzelnen des mindestens einen Benutzers zumindest den Teil des mindestens einen virtuellen Objekts darzustellen; und
selektives Steuern des gegebenen ersten Bereichs der steuerbaren Hintergrundbeleuchtungseinheit, um eines der Folgenden zu erzeugen und auf das erste Auge zu lenken: (ii) die diffusen Lichtstrahlen, (iii) die Kombination aus den kollimierten Lichtstrahlen und den diffusen Lichtstrahlen, während des selektiven Steuerns des gegebenes zweiten Bereichs der steuerbaren Hintergrundbeleuchtungseinheit, um eines der Folgenden zu erzeugen und auf das zweite Auge und zu lenken: (ii) die diffusen Lichtstrahlen, (iii) die Kombination aus den kollimierten Lichtstrahlen und den diffusen Lichtstrahlen.

2. Anzeigesystem (100, 300) nach Anspruch 1, ferner umfassend ein aktives optisches Element (112), das auf dem optischen Pfad der steuerbaren Hintergrundbeleuchtungseinheit (106, 200a-c, 308) angeordnet ist, wobei der mindestens eine Prozessor (104) konfiguriert ist zum:
Steuern eines gegebenen ersten Abschnitts des aktiven optischen Elements, der auf einem optischen Pfad des gegebenen ersten Bereichs der steuerbaren Hintergrundbeleuchtungseinheit liegt, auf der Grundlage der relativen Position des ersten Auges (110a, 310a, 312a, 318a, 324a, 330a) des Einzelnen des mindestens einen Benutzers in Bezug auf die Bildebene, um mindestens eines der Folgenden auf das erste Auge zu lenken: (ii) die diffusen Lichtstrahlen (218, 306a-b, 312, 316, 322a-b, 326a-b, 332), (iii) die Kombination aus den kollimierten Lichtstrahlen (216, 304a-c, 320, 328, 334) und den diffusen Lichtstrahlen, die durch den gegebenen ersten Bereich der steuerbaren Hintergrundbeleuchtungseinheit erzeugt werden; und
Steuern eines gegebenen zweiten Abschnitts des aktiven optischen Elements, der auf einem optischen Pfad des gegebenen zweiten Bereichs der steuerbaren Hintergrundbeleuchtungseinheit liegt, auf der Grundlage der relativen Position des zweiten Auges (110b, 310b, 312b, 318b, 324b, 330b) des Einzelnen des mindestens einen Benutzers in Bezug auf die Bildebene, um eines der Folgenden auf das zweite Augen zu lenken: (ii) die diffusen Lichtstrahlen, (iii) die Kombination aus den kollimierten Lichtstrahlen und den diffusen Lichtstrahlen, die durch den gegebenen zweiten Bereich der steuerbaren Hintergrundbeleuchtungseinheit erzeugt werden.

3. Anzeigesystem (100, 300) nach einem der vorstehenden Ansprüche, wobei der mindestens eine Benutzer eine Vielzahl von Benutzern ist, wobei der mindestens eine Prozessor (104) konfiguriert ist zum:
während der gegebenen Zeitspanne, Detektieren, wann ein gegebener Bereich der steuerbaren Hintergrundbeleuchtungseinheit (106, 200a-c, 308) eingesetzt wird, um zweidimensionalen (2D) virtuellen Inhalt darzustellen; und
wenn detektiert wird, dass der gegebene Bereich der steuerbaren Hintergrundbeleuchtungseinheit eingesetzt wird, um den virtuellen 2D-Inhalt darzustellen,
selektives Steuern des gegebenen Bereichs der steuerbaren Hintergrundbeleuchtungseinheit, um eines der Folgenden zu erzeugen und auf Augen (110a-b, 310a-b, 312a-b, 318a-b, 324a-b, 330a-b) jedes der Vielzahl von Benutzern zu lenken; (ii) die diffusen Lichtstrahlen (218, 306a-b, 312, 316, 322a-b, 326a-b, 332), (iii) die Kombination aus den kollimierten Lichtstrahlen (216, 304a-c, 320, 328, 334) und den diffusen Lichtstrahlen.

4. Anzeigesystem (100, 300) nach einem der vorstehenden Ansprüche, wobei der mindestens eine Prozessor (104) konfiguriert ist zum:
während der gegebenen Zeitspanne, Detektieren, wann der mindestens eine Benutzer ein einziger Benutzer ist und wann Augen (318a-b, 326a-b, 330a-b) des einzigen Benutzers innerhalb einer nativen Betrachtungszone (302) des Anzeigesystems liegen, auf der Grundlage der jeweiligen relativen Positionen der Augen des einzigen Benutzers in Bezug auf die Bildebene, wobei die native Betrachtungszone eine Zone ist, innerhalb derer die von der steuerbaren Hintergrundbeleuchtungseinheit emittierten kollimierten Lichtstrahlen direkt betrachtet werden können, ohne zusätzliche aktive Diffusion durch die steuerbare Hintergrundbeleuchtungseinheit; und
wenn detektiert wird, dass der mindestens eine Benutzer der einzige Benutzer ist, und dass die Augen des einzigen Benutzers innerhalb der nativen Betrachtungszone des Anzeigesystems liegen,
selektives Steuern des mindestens einen horizontal peripheren Bereichs (314b-c) der steuerbaren Hintergrundbeleuchtungseinheit (308), um eines der Folgenden zu erzeugen und auf die Augen des einzigen Benutzers zu lenken: (ii) die diffusen Lichtstrahlen (322a-b, 326a-b, 332), (iii) die Kombination aus den kollimierten Lichtstrahlen (320, 328, 334) und den diffusen Lichtstrahlen.

5. Anzeigesystem (100, 300) nach Anspruch 4, wobei der mindestens eine Prozessor (104) konfiguriert ist zum:
wenn detektiert wird, dass der mindestens eine Benutzer der einzige Benutzer ist, und dass die Augen (318a-b, 324a-b) des einzigen Benutzers innerhalb der nativen Betrachtungszone (302) des Anzeigesystems liegen,
Detektieren, wann die Augen (110a-b, 310a-b, 312a-b, 318a-b, 324a-b, 330a-b) des einzigen Benutzers in einem zentralen Abschnitt der nativen Betrachtungszone des Anzeigesystems liegen; und
wenn detektiert wird, dass die Augen des einzigen Benutzers im zentralen Abschnitt der nativen Betrachtungszone des Anzeigesystems liegen,
selektives Steuern eines zentralen Bereichs (314a) der steuerbaren Hintergrundbeleuchtungseinheit (308), um (i) die kollimierten Lichtstrahlen (320, 328) zu erzeugen.

6. Anzeigesystem (100, 300) nach Anspruch 4 oder 5, wobei der mindestens eine Prozessor (104) konfiguriert ist zum:
wenn detektiert wird, dass der mindestens eine Benutzer der einzige Benutzer ist, und dass die Augen (330a-b) des einzigen Benutzers innerhalb der nativen Betrachtungszone (302) des Anzeigesystems liegen,
selektives Steuern mindestens eines Zwischenbereichs (314d-e) der steuerbaren Hintergrundbeleuchtungseinheit (308), der zwischen dem mindestens einen horizontal-peripheren Bereich (314b-c) und einem zentralen Bereich (314a) der steuerbaren Hintergrundbeleuchtungseinheit liegt, um eines der Folgendem zu erzeugen und auf die Augen des einzigen Benutzers zu lenken: (ii) die diffusen Lichtstrahlen (332, 336a-b), (iii) die Kombination aus den kollimierten Lichtstrahlen (334) und den diffusen Lichtstrahlen,
wobei beim selektiven Steuern des mindestens einen Zwischenbereichs der steuerbaren Hintergrundbeleuchtungseinheit der mindestens eine Prozessor konfiguriert ist, ein Ausmaß der horizontalen Diffusion der diffusen Lichtstrahlen und optional ein Ausmaß der Beugung der kollimierten Lichtstrahlen zu variieren, auf der Grundlage von mindestens einem von: (a) relativen Positionen jeweiliger Teilbereiche des mindestens einen Zwischenbereichs der steuerbaren Hintergrundbeleuchtungseinheit in Bezug auf eine optische Achse (Z) der steuerbaren Hintergrundbeleuchtungseinheit, (b) einem Betrachtungsabstand der Augen des einzigen Benutzers von der LCD-Vorrichtung.

7. Anzeigesystem (100, 300) nach einem der vorstehenden Ansprüche, wobei beim selektiven Steuern des gegebenen ersten Bereichs und des gegebenen zweiten Bereichs der steuerbaren Hintergrundbeleuchtungseinheit (106, 200a-c, 308) der mindestens eine Prozessor (104) konfiguriert ist zum:
Variieren eines Ausmaßes der horizontalen Diffusion der diffusen Lichtstrahlen (218, 306a-b, 312, 316, 322a-b, 326a-b, 332) und optional eines Ausmaßes der Beugung der kollimierten Lichtstrahlen (216, 304a-c, 320, 328, 334), auf der Grundlage von mindestens einem von: (a) relativen Positionen jeweiliger Teilbereiche des gegebenen ersten Bereichs der steuerbaren Hintergrundbeleuchtungseinheit bzw. relativen Positionen jeweiliger Teilbereiche des gegebenen zweiten Bereichs der steuerbaren Hintergrundbeleuchtungseinheit in Bezug auf eine optische Achse (Z) der steuerbaren Hintergrundbeleuchtungseinheit, (b) einem Betrachtungsabstand des ersten Auges und des zweiten Auges des Einzelnen des mindestens einen Benutzers von der LCD-Vorrichtung.

8. Anzeigevorrichtung (100, 300) nach einem der vorstehenden Ansprüche, wobei die steuerbare Hintergrundbeleuchtungseinheit (200a) umfasst:
eine Anordnung von lichtemittierenden Elementen (202a-c), die eingesetzt wird, um Lichtstrahlen (204a) zu emittieren;
eine Vielzahl von reflektierenden Elementen (206a-d), die angeordnet sind, um die Lichtstrahlen entlang des optischen Pfades der steuerbaren Hintergrundbeleuchtungseinheit zu reflektieren; und
eine aktive Diffusionsschicht (208) auf den einzelnen reflektierenden Oberflächen der Vielzahl von reflektierenden Elementen.

9. Anzeigesystem (100, 300) nach einem der Ansprüche 1 bis 7, wobei die steuerbare Hintergrundbeleuchtungseinheit (200b) umfasst:
eine Anordnung von lichtemittierenden Elementen (202d-k), die eingesetzt wird, um Lichtstrahlen (204b) zu emittieren; und
eine Anordnung von kollimierenden Linsen (210a-h), die auf dem optischen Pfad der Anordnung von lichtemittierenden Elementen angeordnet sind,
wobei die kollimierenden Linsen der Anordnung einzeln steuerbar sind, um das Ausmaß der Kollimation und der Diffusion der Lichtstrahlen zu steuern.

10. Anzeigesystem (100, 300) nach einem der Ansprüche 1 bis 7, wobei die steuerbare Hintergrundbeleuchtungseinheit (200c) umfasst:
eine erste Schicht kollimierter Lichtquellen (212a-h); und
eine zweite Schicht diffuser Lichtquellen (214a-g), wobei eine gegebene diffuse Lichtquelle in einer Lücke zwischen angrenzenden kollimierten Lichtquellen angeordnet ist.

11. Verfahren, umfassend:
Erhalten von Informationen, die eine relative Position eines ersten Auges (110a, 310a, 312a, 318a, 324a, 330a) und eines zweiten Auges (110b, 310b, 312b, 318b, 324b, 330b) eines Einzelnen von mindestens einem Benutzer in Bezug auf eine Bildebene einer Flüssigkristallanzeigevorrichtung (LCD-Vorrichtung) (102) angeben, wobei die LCD-Vorrichtung eine steuerbare Hintergrundbeleuchtungseinheit (106, 200a-c, 308) umfasst, die konfiguriert ist, um selektiv (i) kollimierte Lichtstrahlen (216, 304a-c, 320, 328, 334), (ii) diffuse Lichtstrahlen (218, 306a-b, 312, 316, 322ab, 326a-b, 332), (iii) eine Kombination aus den kollimierten Lichtstrahlen und den diffusen Lichtstrahlen zu erzeugen;
Erzeugen oder Abrufen eines Lichtfeldbildes auf der Grundlage der relativen Position des ersten Auges und des zweiten Auges des Einzelnen des mindestens einen Benutzers in Bezug auf die Bildebene, wobei das Lichtfeldbild eine Vielzahl von Pixeln umfasst, wobei ein erster Satz von Pixeln aus der Vielzahl von Pixeln eingesetzt wird, um einen ersten Teil eines synthetischen Lichtfeldes zu erzeugen, der dem ersten Auge entspricht, und wobei ein zweiter Satz von Pixeln aus der Vielzahl von Pixeln eingesetzt wird, um einen zweiten Teil des synthetischen Lichtfeldes zu erzeugen, der dem zweiten Auge entspricht;
Anzeigen des Lichtfeldbildes über die LCD-Vorrichtung zum Darstellen mindestens eines virtuellen Objekts;
Wiederholen des Schritts des Erhaltens, des Schritts des Erzeugens oder Abrufens und des Schritts des Anzeigens für eine gegebene Zeitspanne;
während der gegebenen Zeitspanne Detektieren, wann mindestens eines von: dem ersten Auge, dem zweiten Auge des Einzelnen des mindestens einen Benutzers außerhalb einer aktuellen Betrachtungszone des Anzeigesystems liegt, auf der Grundlage der relativen Position des ersten Auges und des zweiten Auges des Einzelnen des mindestens einen Benutzers in Bezug auf die Bildebene, wobei die aktuelle Betrachtungszone eine Zone ist, auf die die von der steuerbaren Hintergrundbeleuchtungseinheit emittierten Lichtstrahlen derzeit gelenkt werden; und
wenn detektiert wird, dass mindestens eines von: dem ersten Auge, dem zweiten Auge des Einzelnen des mindestens einen Benutzers außerhalb der aktuellen Betrachtungszone des Anzeigesystems liegt,
Bestimmen eines gegebenen ersten Bereichs der steuerbaren Hintergrundbeleuchtungseinheit, der eingesetzt wird, um dem ersten Auge des Einzelnen des mindestens einen Benutzers zumindest einen Teil des mindestens einen virtuellen Objekts darzustellen, und eines gegebenen zweiten Bereichs der steuerbaren Hintergrundbeleuchtungseinheit, der eingesetzt wird, um dem zweiten Auge des Einzelnen des mindestens einen Benutzers zumindest den Teil des mindestens einen virtuellen Objekts darzustellen; und
selektives Steuern des gegebenen ersten Bereichs der steuerbaren Hintergrundbeleuchtungseinheit, um eines der Folgenden zu erzeugen und auf das erste Auge zu lenken: (ii) die diffusen Lichtstrahlen, (iii) die Kombination aus den kollimierten Lichtstrahlen und den diffusen Lichtstrahlen, während des selektiven Steuerns des gegebenes zweiten Bereichs der steuerbaren Hintergrundbeleuchtungseinheit, um eines der Folgenden zu erzeugen und auf das zweite Auge und zu lenken: (ii) die diffusen Lichtstrahlen, (iii) die Kombination aus den kollimierten Lichtstrahlen und den diffusen Lichtstrahlen.

12. Verfahren nach Anspruch 11, ferner umfassend:
Steuern eines gegebenen ersten Abschnitts eines aktiven optischen Elements (112), das auf einem optischen Pfad des gegebenen ersten Bereichs der steuerbaren Hintergrundbeleuchtungseinheit (106, 200a-c, 308) liegt, auf der Grundlage der relativen Position des ersten Auges des Einzelnen des mindestens einen Benutzers in Bezug auf die Bildebene, um eines der Folgenden auf das erste Auge (110a, 310a, 312a, 318a, 324a, 330a) zu lenken: (ii) die diffusen Lichtstrahlen (218, 306a-b, 312, 316, 322a-b, 326a-b, 332), (iii) die Kombination aus den kollimierten Lichtstrahlen (216, 304a-c, 320, 328, 334) und den diffusen Lichtstrahlen, die durch den gegebenen ersten Bereich der steuerbaren Hintergrundbeleuchtungseinheit erzeugt werden; und
Steuern eines gegebenen zweiten Abschnitts des aktiven optischen Elements, der auf einem optischen Pfad des gegebenen zweiten Bereichs der steuerbaren Hintergrundbeleuchtungseinheit liegt, auf der Grundlage der relativen Position des zweiten Auges (110b, 310b, 312b, 318b, 324b, 330b) des Einzelnen des mindestens einen Benutzers in Bezug auf die Bildebene, um eines der Folgenden auf das zweite Auge zu lenken: (ii) die diffusen Lichtstrahlen, (iii) die Kombination aus den kollimierten Lichtstrahlen und den diffusen Lichtstrahlen, erzeugt durch den gegebenen zweiten Bereich der steuerbaren Hintergrundbeleuchtungseinheit,
wobei das aktive optische Element auf dem optischen Pfad der steuerbaren Hintergrundbeleuchtungseinheit angeordnet ist.

13. Verfahren nach Anspruch 11 oder 12, wobei der mindestens eine Benutzer eine Vielzahl von Benutzern ist, und wobei das Verfahren ferner umfasst:
während der gegebenen Zeitspanne, Detektieren, wann ein gegebener Bereich der steuerbaren Hintergrundbeleuchtungseinheit (106, 200a-c, 308) eingesetzt wird, um zweidimensionalen (2D) virtuellen Inhalt darzustellen; und
wenn detektiert wird, dass der gegebene Bereich der steuerbaren Hintergrundbeleuchtungseinheit eingesetzt wird, um den virtuellen 2D-Inhalt darzustellen,
selektives Steuern des gegebenen Bereichs der steuerbaren Hintergrundbeleuchtungseinheit, um eines der Folgenden zu erzeugen und auf Augen (110a-b, 310a-b, 312a-b, 318a-b, 324a-b, 330a-b) jedes der Vielzahl von Benutzern zu lenken: (ii) die diffusen Lichtstrahlen (218, 306a-b, 312, 316, 322a-b, 326a-b, 332), (iii) die Kombination aus den kollimierten Lichtstrahlen (216, 304a-c, 320, 328, 334) und den diffusen Lichtstrahlen.

14. Verfahren nach einem der Ansprüche 11 bis 13, ferner umfassend:
während der gegebenen Zeitspanne, Detektieren, wann der mindestens eine Benutzer ein einziger Benutzer ist und wann Augen (318a-b, 326a-b, 330a-b) des einzigen Benutzers innerhalb einer nativen Betrachtungszone (302) des Anzeigesystems liegen, auf der Grundlage der jeweiligen relativen Positionen der Augen des einzigen Benutzers in Bezug auf die Bildebene, wobei die native Betrachtungszone eine Zone ist, innerhalb derer die von der steuerbaren Hintergrundbeleuchtungseinheit emittierten kollimierten Lichtstrahlen direkt betrachtet werden können, ohne zusätzliche aktive Diffusion durch die steuerbare Hintergrundbeleuchtungseinheit; und
wenn detektiert wird, dass der mindestens eine Benutzer der einzige Benutzer ist, und dass die Augen des einzigen Benutzers innerhalb der nativen Betrachtungszone des Anzeigesystems liegen,
selektives Steuern mindestens eines horizontal peripheren Bereichs (314b-c) der steuerbaren Hintergrundbeleuchtungseinheit (308), um ein beliebiges der Folgenden zu erzeugen und auf die Augen des einzigen Benutzers zu lenken: (ii) die diffusen Lichtstrahlen (322a-b, 326a-b, 332), (iii) die Kombination aus den kollimierten Lichtstrahlen (320, 328, 334) und den diffusen Lichtstrahlen.

15. Verfahren nach Anspruch 14, ferner umfassend:
wenn detektiert wird, dass der mindestens eine Benutzer der einzige Benutzer ist, und dass die Augen (318a-b, 324a-b) des einzigen Benutzers innerhalb der nativen Betrachtungszone (302) des Anzeigesystems liegen,
Detektieren, wann die Augen (110a-b, 310a-b, 312a-b, 318a-b, 324a-b, 330a-b) des einzigen Benutzers in einem zentralen Abschnitt der nativen Betrachtungszone des Anzeigesystems liegen; und
wenn detektiert wird, dass die Augen des einzigen Benutzers im zentralen Abschnitt der nativen Betrachtungszone des Anzeigesystems liegen,
selektives Steuern eines zentralen Bereichs (314a) der steuerbaren Hintergrundbeleuchtungseinheit (308), um (i) die kollimierten Lichtstrahlen (320, 328) zu erzeugen.

16. Verfahren nach Anspruch 14 oder 15, ferner umfassend:
wenn detektiert wird, dass der mindestens eine Benutzer der einzige Benutzer ist, und dass die Augen (330a-b) des einzigen Benutzers innerhalb der nativen Betrachtungszone (302) des Anzeigesystems liegen,
selektives Steuern mindestens eines Zwischenbereichs (314d-e) der steuerbaren Hintergrundbeleuchtungseinheit (308), der zwischen dem mindestens einen horizontal-peripheren Bereich (314b-c) und einem zentralen Bereich (314a) der steuerbaren Hintergrundbeleuchtungseinheit liegt, um eines der Folgendem zu erzeugen und auf die Augen des einzigen Benutzers zu lenken: (ii) die diffusen Lichtstrahlen (332, 336a-b), (iii) die Kombination aus den kollimierten Lichtstrahlen (334) und den diffusen Lichtstrahlen,
wobei der Schritt des selektiven Steuerns des mindestens einen Zwischenbereichs der steuerbaren Hintergrundbeleuchtungseinheit das Variieren eines Ausmaßes der horizontalen Diffusion der diffusen Lichtstrahlen und optional eines Ausmaßes der Beugung der kollimierten Lichtstrahlen umfasst, auf der Grundlage von mindestens einem von: (a) relativen Positionen jeweiliger Teilbereiche des mindestens einen Zwischenbereichs der steuerbaren Hintergrundbeleuchtungseinheit in Bezug auf eine optische Achse (Z) der steuerbaren Hintergrundbeleuchtungseinheit, (b) einem Betrachtungsabstand der Augen des einzigen Benutzers von der LCD-Vorrichtung.

17. Verfahren nach einem der Ansprüche 11 bis 16, wobei der Schritt des selektiven Steuerns des gegebenen ersten Bereichs und des gegebenen zweiten Bereichs der steuerbaren Hintergrundbeleuchtungseinheit (106, 200a-c, 308) umfasst:
Variieren eines Ausmaßes der horizontalen Diffusion der diffusen Lichtstrahlen (218, 306a-b, 312, 316, 322a-b, 326a-b, 332) und optional eines Ausmaßes der Beugung der kollimierten Lichtstrahlen (216, 304a-c, 320, 328, 334), auf der Grundlage von mindestens einem von: (a) relativen Positionen jeweiliger Teilbereiche des gegebenen ersten Bereichs der steuerbaren Hintergrundbeleuchtungseinheit bzw. relativen Positionen jeweiliger Teilbereiche des gegebenen zweiten Bereichs der steuerbaren Hintergrundbeleuchtungseinheit in Bezug auf eine optische Achse (Z) der steuerbaren Hintergrundbeleuchtungseinheit, (b) einem Betrachtungsabstand des ersten Auges und des zweiten Auges des Einzelnen des mindestens einen Benutzers von der LCD-Vorrichtung.

18. Verfahren nach einem der Ansprüche 11 bis 17, wobei die steuerbare Hintergrundbeleuchtungseinheit (200a) umfasst:
eine Anordnung von lichtemittierenden Elementen (202a-c), die eingesetzt wird, um Lichtstrahlen (204a) zu emittieren;
eine Vielzahl von reflektierenden Elementen (206a-d), die angeordnet sind, um die Lichtstrahlen entlang des optischen Pfades der steuerbaren Hintergrundbeleuchtungseinheit zu reflektieren; und
eine aktive Diffusionsschicht (208) auf den einzelnen reflektierenden Oberflächen der Vielzahl von reflektierenden Elementen.

19. Verfahren nach einem der Ansprüche 11 bis 17, wobei die steuerbare Hintergrundbeleuchtungseinheit (200b) umfasst:
eine Anordnung von lichtemittierenden Elementen (202d-k), die eingesetzt wird, um Lichtstrahlen (204b) zu emittieren; und
eine Anordnung von kollimierenden Linsen (210a-h), die auf dem optischen Pfad der Anordnung von lichtemittierenden Elementen angeordnet sind,
wobei die kollimierenden Linsen der Anordnung einzeln steuerbar sind, um das Ausmaß der Kollimation und der Diffusion der Lichtstrahlen zu steuern.

20. Verfahren nach einem der Ansprüche 11 bis 17, wobei die steuerbare Hintergrundbeleuchtungseinheit (200c) umfasst:
eine erste Schicht kollimierter Lichtquellen (212a-h); und
eine zweite Schicht diffuser Lichtquellen (214a-g), wobei eine gegebene diffuse Lichtquelle in einer Lücke zwischen angrenzenden kollimierten Lichtquellen angeordnet ist.

## Revendications

1. Système d'affichage (100, 300) comprenant :
un dispositif (102) d'affichage à cristaux liquides (LCD) comprenant une unité de rétroéclairage (106, 200a-c, 308) pouvant être commandée qui est configurée pour produire sélectivement (i) des rayons lumineux collimatés (216, 304a-c, 320, 328, 334), (ii) des rayons lumineux diffusés (218, 306a-b, 312, 316, 322a-b, 326a-b, 332), (iii) une combinaison des rayons lumineux collimatés et des rayons lumineux diffusés ; et
au moins un processeur (104) configuré pour :
obtenir des informations indiquant une localisation relative d'un premier œil (110a, 310a, 312a, 318a, 324a, 330a) et d'un second œil (110b, 310b, 312b, 318b, 324b, 330b) d'un utilisateur individuel parmi au moins un utilisateur par rapport à un plan d'image du dispositif LCD ;
générer ou récupérer une image de champ lumineux, en fonction de la localisation relative du premier œil et du second œil de l'utilisateur individuel de l'au moins un utilisateur par rapport au plan d'image, dans lequel l'image de champ lumineux comprend une pluralité de pixels, un premier ensemble de pixels dans la pluralité de pixels étant utilisé pour générer une première partie d'un champ lumineux synthétique qui correspond au premier œil, et un second ensemble de pixels dans la pluralité de pixels étant utilisé pour générer une seconde partie du champ lumineux synthétique qui correspond au second œil ;
afficher l'image de champ lumineux par le biais du dispositif LCD pour présenter au moins un objet virtuel ;
répéter l'étape d'obtention, l'étape de génération ou de récupération, et l'étape d'affichage pendant un laps de temps donné ;
détecter, pendant le laps de temps donné, à quel moment au moins l'un parmi : le premier œil, le second œil de l'utilisateur individuel de l'au moins un utilisateur se trouve en dehors d'une zone de visualisation actuelle du système d'affichage, en fonction de la localisation relative du premier œil et du second œil de l'utilisateur individuel de l'au moins un utilisateur par rapport au plan d'image, la zone de visualisation actuelle étant une zone vers laquelle les rayons lumineux émis par l'unité de rétroéclairage pouvant être commandée sont actuellement dirigés ; et
lorsqu'il est détecté qu'au moins l'un parmi : le premier œil, le second œil de l'utilisateur individuel de l'au moins un utilisateur se trouve en dehors de la zone de visualisation actuelle du système d'affichage,
déterminer une première région donnée de l'unité de rétroéclairage pouvant être commandée qui est utilisée pour présenter au moins une partie de l'au moins un objet virtuel au premier œil de l'utilisateur individuel de l'au moins un utilisateur, et une seconde région donnée de l'unité de rétroéclairage pouvant être commandée qui est utilisée pour présenter au moins la partie de l'au moins un objet virtuel au second œil de l'utilisateur individuel de l'au moins un utilisateur ; et
commander sélectivement la première région donnée de l'unité de rétroéclairage pouvant être commandée pour produire et diriger vers le premier œil l'un quelconque parmi : (ii) les rayons lumineux diffusés, (iii) la combinaison des rayons lumineux collimatés et des rayons lumineux diffusés, tout en commandant sélectivement la seconde région donnée de l'unité de rétroéclairage pouvant être commandée pour produire et diriger vers le second œil l'un quelconque parmi : (ii) les rayons lumineux diffusés, (iii) la combinaison des rayons lumineux collimatés et des rayons lumineux diffusés.

2. Système d'affichage (100, 300) selon la revendication 1, comprenant en outre un élément optique actif (112) agencé sur le trajet optique de l'unité de rétroéclairage (106, 200a-c, 308) pouvant être commandée, dans lequel l'au moins un processeur (104) est configuré pour :
commander une première section donnée de l'élément optique actif qui se trouve sur un trajet optique de la première région donnée de l'unité de rétroéclairage pouvant être commandée, en fonction de la localisation relative du premier œil (110a, 310a, 312a, 318a, 324a, 330a) de l'utilisateur individuel de l'au moins un utilisateur par rapport au plan d'image, pour diriger vers le premier œil l'un quelconque parmi : (ii) les rayons lumineux diffusés (218, 306a-b, 312, 316, 322a-b, 326a-b, 332), (iii) la combinaison des rayons lumineux collimatés (216, 304a-c, 320, 328, 334) et des rayons lumineux diffusés produits par la première région donnée de l'unité de rétroéclairage pouvant être commandée ; et
commander une seconde section donnée de l'élément optique actif qui se trouve sur un trajet optique de la seconde région donnée de l'unité de rétroéclairage pouvant être commandée, en fonction de la localisation relative du second œil (110b, 310b, 312b, 318b, 324b, 330b) de l'utilisateur individuel de l'au moins un utilisateur par rapport au plan d'image, pour diriger vers le second œil l'un quelconque parmi : (ii) les rayons lumineux diffusés, (iii) la combinaison des rayons lumineux collimatés et des rayons lumineux diffusés produits par la seconde région donnée de l'unité de rétroéclairage pouvant être commandée.

3. Système d'affichage (100, 300) selon l'une quelconque des revendications précédentes, dans lequel l'au moins un utilisateur est une pluralité d'utilisateurs, dans lequel l'au moins un processeur (104) est configuré pour :
détecter, pendant le laps de temps donné, le moment où une région donnée de l'unité de rétroéclairage (106, 200a-c, 308) pouvant être commandée est utilisée pour présenter un contenu virtuel bidimensionnel (2D) ; et
lorsqu'il est détecté que la région donnée de l'unité de rétroéclairage pouvant être commandée est utilisée pour présenter le contenu virtuel 2D,
commander sélectivement la région donnée de l'unité de rétroéclairage pouvant être commandée pour produire et diriger vers les yeux (110a-b, 310a-b, 312a-b, 318a-b, 324a-b, 330a-b) de chacun de la pluralité d'utilisateurs l'un quelconque parmi : (ii) les rayons lumineux diffusés (218, 306a-b, 312, 316, 322a-b, 326a-b, 332), (iii) la combinaison des rayons lumineux collimatés (216, 304a-c, 320, 328, 334) et des rayons lumineux diffusés.

4. Système d'affichage (100, 300) selon l'une quelconque des revendications précédentes, dans lequel l'au moins un processeur (104) est configuré pour :
détecter, pendant le laps de temps donné, le moment où l'au moins un utilisateur est un utilisateur unique, et le moment où des yeux (318a-b, 326a-b, 330a-b) de l'utilisateur unique se trouvent dans une zone de visualisation native (302) du système d'affichage, en fonction de localisations relatives respectives des yeux de l'utilisateur unique par rapport au plan d'image, la zone de visualisation native étant une zone à l'intérieur de laquelle les rayons lumineux collimatés émis par l'unité de rétroéclairage pouvant être commandée peuvent être visualisés directement, sans diffusion active supplémentaire par l'unité de rétroéclairage pouvant être commandée ; et
lorsqu'il est détecté que l'au moins un utilisateur est l'utilisateur unique et que les yeux de l'utilisateur unique se trouvent dans la zone de visualisation native du système d'affichage,
commander sélectivement au moins une région périphérique horizontale (314b-c) de l'unité de rétroéclairage (308) pouvant être commandée pour produire et diriger vers les yeux de l'utilisateur unique l'un quelconque parmi : (ii) les rayons lumineux diffusés (322a-b, 326a-b, 332), (iii) la combinaison des rayons lumineux collimatés (320, 328, 334) et des rayons lumineux diffusés.

5. Système d'affichage (100, 300) selon la revendication 4, dans lequel l'au moins un processeur (104) est configuré pour :
lorsqu'il est détecté que l'au moins un utilisateur est l'utilisateur unique et que les yeux (318a-b, 324a-b) de l'utilisateur unique se trouvent dans la zone de visualisation native (302) du système d'affichage,
détecter le moment où les yeux (110a-b, 310a-b, 312a-b, 318a-b, 324a-b, 330a-b) de l'utilisateur unique se trouvent au niveau d'une section centrale de la zone de visualisation native du système d'affichage ; et
lorsqu'il est détecté que les yeux de l'utilisateur unique se trouvent au niveau de la section centrale de la zone de visualisation native du système d'affichage,
commander sélectivement une région centrale (314a) de l'unité de rétroéclairage (308) pouvant être commandée pour produire (i) les rayons lumineux collimatés (320, 328).

6. Système d'affichage (100, 300) selon la revendication 4 ou 5, dans lequel l'au moins un processeur (104) est configuré pour :
lorsqu'il est détecté que l'au moins un utilisateur est l'utilisateur unique et que les yeux (330a-b) de l'utilisateur unique se trouvent dans la zone de visualisation native (302) du système d'affichage,
commander sélectivement au moins une région intermédiaire (314d-e) de l'unité de rétroéclairage (308) pouvant être commandée, laquelle région intermédiaire est située entre l'au moins une région périphérique horizontale (314b-c) et une région centrale (314a) de l'unité de rétroéclairage pouvant être commandée, pour produire et diriger vers les yeux de l'utilisateur unique l'une quelconque parmi : (ii) les rayons lumineux diffusés (332, 336a-b), (iii) la combinaison des rayons lumineux collimatés (334) et des rayons lumineux diffusés,
dans lequel, lors de la commande sélective de l'au moins une région intermédiaire de l'unité de rétroéclairage pouvant être commandée, l'au moins un processeur est configuré pour faire varier une étendue de diffusion horizontale des rayons lumineux diffusés et, éventuellement, une étendue de courbure des rayons lumineux collimatés, en fonction d'au moins l'un parmi : (a) des localisations relatives de sous-régions respectives de l'au moins une région intermédiaire de l'unité de rétroéclairage pouvant être commandée par rapport à un axe optique (Z) de l'unité de rétroéclairage pouvant être commandée, (b) une distance de visualisation des yeux de l'utilisateur unique à partir du dispositif LCD.

7. Système d'affichage (100, 300) selon l'une quelconque des revendications précédentes, dans lequel, lors de la commande sélective de la première région donnée et de la seconde région donnée de l'unité de rétroéclairage (106, 200a-c, 308) pouvant être commandée, l'au moins un processeur (104) est configuré pour :
faire varier une étendue de diffusion horizontale des rayons lumineux diffusés (218, 306a-b, 312, 316, 322a-b, 326a-b, 332) et, éventuellement, une étendue de courbure des rayons lumineux collimatés (216, 304a-c, 320, 328, 334), en fonction d'au moins l'un parmi : (a) des localisations relatives de sous-régions respectives de la première région donnée de l'unité de rétroéclairage pouvant être commandée et des localisations relatives de sous-régions respectives de la seconde région donnée de l'unité de rétroéclairage pouvant être commandée par rapport à un axe optique (Z) de l'unité de rétroéclairage pouvant être commandée, respectivement, (b) une distance de visualisation du premier œil et du second œil de l'utilisateur individuel de l'au moins un utilisateur à partir du dispositif LCD.

8. Système d'affichage (100, 300) selon l'une quelconque des revendications précédentes, dans lequel l'unité de rétroéclairage (200a) pouvant être commandée comprend :
un réseau d'éléments électroluminescents (202a-c) utilisés pour émettre des rayons lumineux (204a) ;
une pluralité d'éléments réfléchissants (206a-d) agencés pour réfléchir les rayons lumineux le long du trajet optique de l'unité de rétroéclairage pouvant être commandée ; et
une couche de diffusion active (208) sur des surfaces réfléchissantes individuelles de la pluralité d'éléments réfléchissants.

9. Système d'affichage (100, 300) selon l'une quelconque des revendications 1 à 7, dans lequel l'unité de rétroéclairage (200b) pouvant être commandée comprend :
un réseau d'éléments électroluminescents (202d-k) utilisés pour émettre des rayons lumineux (204b) ; et
un réseau de lentilles de collimation (210a-h) agencées sur un trajet optique du réseau d'éléments électroluminescents,
dans lequel les lentilles de collimation dudit réseau peuvent être commandées individuellement, pour commander une étendue de collimation et de diffusion des rayons lumineux.

10. Système d'affichage (100, 300) selon l'une quelconque des revendications 1 à 7, dans lequel l'unité de rétroéclairage (200c) pouvant être commandée comprend :
une première couche de sources de lumière collimatée (212ah) ; et
une seconde couche de sources de lumière diffusée (214a-g), dans lequel une source de lumière diffusée donnée est agencée au niveau d'un espace entre des sources de lumière collimatée adjacentes.

11. Procédé comprenant :
l'obtention d'informations indiquant une localisation relative d'un premier œil (110a, 310a, 312a, 318a, 324a, 330a) et d'un second œil (110b, 310b, 312b, 318b, 324b, 330b) d'un utilisateur individuel parmi au moins un utilisateur par rapport à un plan d'image d'un dispositif (102) d'affichage à cristaux liquides (LCD), le dispositif LCD comprenant une unité de rétroéclairage (106, 200a-c, 308) pouvant être commandée qui est configurée pour produire sélectivement (i) des rayons lumineux collimatés (216, 304a-c, 320, 328, 334), (ii) des rayons lumineux diffusés (218, 306a-b, 312, 316, 322a-b, 326a-b, 332), (iii) une combinaison des rayons lumineux collimatés et des rayons lumineux diffusés ;
la génération ou la récupération d'une image de champ lumineux, en fonction de la localisation relative du premier œil et du second œil de l'utilisateur individuel de l'au moins un utilisateur par rapport au plan d'image, dans lequel l'image de champ lumineux comprend une pluralité de pixels, un premier ensemble de pixels dans la pluralité de pixels étant utilisé pour générer une première partie d'un champ lumineux synthétique qui correspond au premier œil, et un second ensemble de pixels dans la pluralité de pixels étant utilisé pour générer une seconde partie du champ lumineux synthétique qui correspond au second œil ;
l'affichage de l'image de champ lumineux par le biais du dispositif LCD pour présenter au moins un objet virtuel ;
la répétition de l'étape d'obtention, de l'étape de génération ou de récupération, et de l'étape d'affichage pendant un laps de temps donné ;
la détection, pendant le laps de temps donné, du moment où au moins l'un parmi : le premier œil, le second œil de l'utilisateur individuel de l'au moins un utilisateur se trouve en dehors d'une zone de visualisation actuelle du système d'affichage, en fonction de la localisation relative du premier œil et du second œil de l'utilisateur individuel de l'au moins un utilisateur par rapport au plan d'image, la zone de visualisation actuelle étant une zone vers laquelle les rayons lumineux émis par l'unité de rétroéclairage pouvant être commandée sont actuellement dirigés ; et
lorsqu'il est détecté qu'au moins l'un parmi : le premier œil, le second œil de l'utilisateur individuel parmi au moins un utilisateur se trouve en dehors de la zone de visualisation actuelle du système d'affichage,
la détermination d'une première région donnée de l'unité de rétroéclairage pouvant être commandée qui est utilisée pour présenter au moins une partie de l'au moins un objet virtuel au premier œil de l'utilisateur individuel de l'au moins un utilisateur, et une seconde région donnée de l'unité de rétroéclairage pouvant être commandée qui est utilisée pour présenter au moins la partie de l'au moins un objet virtuel au second œil de l'utilisateur individuel de l'au moins un utilisateur ; et
la commande sélective de la première région donnée de l'unité de rétroéclairage pouvant être commandée pour produire et diriger vers le premier œil l'un quelconque parmi : (ii) les rayons lumineux diffusés, (iii) la combinaison des rayons lumineux collimatés et des rayons lumineux diffusés, tout en commandant sélectivement la seconde région donnée de l'unité de rétroéclairage pouvant être commandée pour produire et diriger vers le second œil l'un quelconque parmi : (ii) les rayons lumineux diffusés, (iii) la combinaison des rayons lumineux collimatés et des rayons lumineux diffusés.

12. Procédé selon la revendication 11, comprenant en outre :
la commande d'une première section donnée d'un élément optique actif (112) qui se trouve sur un trajet optique de la première région donnée de l'unité de rétroéclairage (106, 200a-c, 308) pouvant être commandée, en fonction de la localisation relative du premier œil de l'utilisateur individuel de l'au moins un utilisateur par rapport au plan d'image, pour diriger vers le premier œil (110a, 310a, 312a, 318a, 324a, 330a) l'un quelconque parmi : (ii) les rayons lumineux diffusés (218, 306a-b, 312, 316, 322a-b, 326a-b, 332), (iii) la combinaison des rayons lumineux collimatés (216, 304a-c, 320, 328, 334) et des rayons lumineux diffusés produits par la première région donnée de l'unité de rétroéclairage pouvant être commandée ; et
la commande d'une seconde section donnée de l'élément optique actif qui se trouve sur un trajet optique de la seconde région donnée de l'unité de rétroéclairage pouvant être commandée, en fonction de la localisation relative du second œil (110b, 310b, 312b, 318b, 324b, 330b) de l'utilisateur individuel de l'au moins un utilisateur par rapport au plan d'image, pour diriger vers le second œil l'un quelconque parmi : (ii) les rayons lumineux diffusés, (iii) la combinaison des rayons lumineux collimatés et des rayons lumineux diffusés produits par la seconde région donnée de l'unité de rétroéclairage pouvant être commandée,
dans lequel l'élément optique actif est agencé sur le trajet optique de l'unité de rétroéclairage pouvant être commandée.

13. Procédé selon la revendication 11 ou 12, dans lequel l'au moins un utilisateur est une pluralité d'utilisateurs, et dans lequel le procédé comprend en outre :
la détection, pendant le laps de temps donné, du moment où une région donnée de l'unité de rétroéclairage (106, 200a-c, 308) pouvant être commandée est utilisée pour présenter un contenu virtuel bidimensionnel (2D) ; et
lorsqu'il est détecté que la région donnée de l'unité de rétroéclairage pouvant être commandée est utilisée pour présenter le contenu virtuel 2D,
la commande sélective de la région donnée de l'unité de rétroéclairage pouvant être commandée pour produire et diriger vers les yeux (110a-b, 310a-b, 312a-b, 318a-b, 324a-b, 330a-b) de chacun de la pluralité d'utilisateurs l'un quelconque parmi : (ii) les rayons lumineux diffusés (218, 306a-b, 312, 316, 322a-b, 326a-b, 332), (iii) la combinaison des rayons lumineux collimatés (216, 304a-c, 320, 328, 334) et des rayons lumineux diffusés.

14. Procédé selon l'une quelconque des revendications 11 à 13, comprenant en outre :
la détection, pendant le laps de temps donné, du moment où l'au moins un utilisateur est un utilisateur unique, et du moment où des yeux (318a-b, 326a-b, 330a-b) de l'utilisateur unique se trouvent dans une zone de visualisation native (302) du système d'affichage, en fonction de localisations relatives respectives des yeux de l'utilisateur unique par rapport au plan d'image, la zone de visualisation native étant une zone à l'intérieur de laquelle les rayons lumineux collimatés émis par l'unité de rétroéclairage pouvant être commandée peuvent être visualisés directement, sans diffusion active supplémentaire par l'unité de rétroéclairage pouvant être commandée ; et
lorsqu'il est détecté que l'au moins un utilisateur est l'utilisateur unique et que les yeux de l'utilisateur unique se trouvent dans la zone de visualisation native du système d'affichage,
la commande sélective d'au moins une région périphérique horizontale (314b-c) de l'unité de rétroéclairage (308) pouvant être commandée pour produire et diriger vers les yeux de l'utilisateur unique l'un quelconque parmi : (ii) les rayons lumineux diffusés (322a-b, 326a-b, 332), (iii) la combinaison des rayons lumineux collimatés (320, 328, 334) et des rayons lumineux diffusés.

15. Procédé selon la revendication 14, comprenant en outre :
lorsqu'il est détecté que l'au moins un utilisateur est l'utilisateur unique et que les yeux (318a-b, 324a-b) de l'utilisateur unique se trouvent dans la zone de visualisation native (302) du système d'affichage,
la détection du moment où les yeux (110a-b, 310a-b, 312a-b, 318a-b, 324a-b, 330a-b) de l'utilisateur unique se trouvent au niveau d'une section centrale de la zone de visualisation native du système d'affichage ; et
lorsqu'il est détecté que les yeux de l'utilisateur unique se trouvent au niveau de la section centrale de la zone de visualisation native du système d'affichage,
la commande sélective d'une région centrale (314a) de l'unité de rétroéclairage (308) pouvant être commandée pour produire (i) les rayons lumineux collimatés (320, 328).

16. Procédé selon la revendication 14 ou 15, comprenant en outre :
lorsqu'il est détecté que l'au moins un utilisateur est l'utilisateur unique et que les yeux (330a-b) de l'utilisateur unique se trouvent dans la zone de visualisation native (302) du système d'affichage,
la commande sélective d'au moins une région intermédiaire (314d-e) de l'unité de rétroéclairage (308) pouvant être commandée, laquelle région intermédiaire est située entre l'au moins une région périphérique horizontale (314b-c) et une région centrale (314a) de l'unité de rétroéclairage pouvant être commandée, pour produire et diriger vers les yeux de l'utilisateur unique l'une quelconque parmi : (ii) les rayons lumineux diffusés (332, 336a-b), (iii) la combinaison des rayons lumineux collimatés (334) et des rayons lumineux diffusés,
dans lequel l'étape de commande sélective de l'au moins une région intermédiaire de l'unité de rétroéclairage pouvant être commandée comprend la variation d'une étendue de diffusion horizontale des rayons lumineux diffusés et, éventuellement, d'une étendue de courbure des rayons lumineux collimatés, en fonction d'au moins l'un parmi : (a) des localisations relatives de sous-régions respectives de l'au moins une région intermédiaire de l'unité de rétroéclairage pouvant être commandée par rapport à un axe optique (Z) de l'unité de rétroéclairage pouvant être commandée, (b) une distance de visualisation des yeux de l'utilisateur unique à partir du dispositif LCD.

17. Procédé selon l'une quelconque des revendications 11 à 16, dans lequel l'étape consistant à commander sélectivement la première région donnée et la seconde région donnée de l'unité de rétroéclairage (106, 200a-c, 308) pouvant être commandée comprend :
la variation d'une étendue de diffusion horizontale des rayons lumineux diffusés (218, 306a-b, 312, 316, 322a-b, 326a-b, 332) et, éventuellement, une étendue de courbure des rayons lumineux collimatés (216, 304a-c, 320, 328, 334), en fonction d'au moins l'un parmi : (a) des localisations relatives de sous-régions respectives de la première région donnée de l'unité de rétroéclairage pouvant être commandée et des localisations relatives de sous-régions respectives de la seconde région donnée de l'unité de rétroéclairage pouvant être commandée par rapport à un axe optique (Z) de l'unité de rétroéclairage pouvant être commandée, respectivement, (b) une distance de visualisation du premier œil et du second œil de l'utilisateur individuel de l'au moins un utilisateur à partir du dispositif LCD.

18. Procédé selon l'une quelconque des revendications 11 à 17, dans lequel l'unité de rétroéclairage (200a) pouvant être commandée comprend :
un réseau d'éléments électroluminescents (202a-c) utilisés pour émettre des rayons lumineux (204a) ;
une pluralité d'éléments réfléchissants (206a-d) agencés pour réfléchir les rayons lumineux le long du trajet optique de l'unité de rétroéclairage pouvant être commandée ; et
une couche de diffusion active (208) sur des surfaces réfléchissantes individuelles de la pluralité d'éléments réfléchissants.

19. Procédé selon l'une quelconque des revendications 11 à 17, dans lequel l'unité de rétroéclairage (200b) pouvant être commandée comprend :
un réseau d'éléments électroluminescents (202d-k) utilisés pour émettre des rayons lumineux (204b) ; et
un réseau de lentilles de collimation (210a-h) agencées sur un trajet optique du réseau d'éléments électroluminescents,
dans lequel les lentilles de collimation dudit réseau peuvent être commandées individuellement, pour commander une étendue de collimation et de diffusion des rayons lumineux.

20. Procédé selon l'une quelconque des revendications 11 à 17, dans lequel l'unité de rétroéclairage (200c) pouvant être commandée comprend :
une première couche de sources de lumière collimatée (212ah) ; et
une seconde couche de sources de lumière diffusée (214a-g), dans lequel une source de lumière diffusée donnée est agencée au niveau d'un espace entre des sources de lumière collimatée adjacentes.
